# EUROPÄISCHE PATENTSCHRIFT

(11) **EP 3 391 735 B1**
(45) Veröffentlichungstag und Bekanntmachung des Hinweises auf die Patenterteilung: **08.01.2020**
(21) Anmeldenummer: 18000359.2
(22) Anmeldetag: 13.04.2018
(51) Int. Cl.: A01F 15/14, B65B 13/32

(54) **BALLENPRESSE**
BALING PRESS
PRESSE À BALLES

(30) Priorität: 21.04.2017 DE 102017003879
(43) Veröffentlichungstag der Anmeldung: 24.10.2018
(73) Patentinhaber: Maschinenfabrik Bernard Krone GmbH & Co. KG, 48480 Spelle (DE)
(72) Erfinder: Kreyenhagen, Michael, 49163 Bohmte (DE); Horstmann, Josef, 49479 Ibbenbüren (DE); Martensen, Klaus, 48477 Hörstel (DE); Amshove, Martin, 48619 Heek (DE)
(74) Vertreter: Pott, Ulrich

(56) Entgegenhaltungen:
- EP-A1- 0 564 189
- EP-A1- 2 562 091
- WO-A1-2014/144470
- DE-A1- 1 956 255

## Beschreibung

Die Erfindung betrifft eine Ballenpresse für landwirtschaftliches Erntegut. Die Ballenpresse weist einen Presskanal und mindestens eine Bindeeinrichtung für ein bandförmiges Bindematerial, vorzugsweise aus verschweißbarem oder verklebbarem Kunststoff, auf. Das bandförmige Bindematerial dient der Umhüllung des zu pressenden Ballen. Die Bindeeinrichtung weist weiterhin einen das Bindematerial stoffschlüssig verbindenden Stoffschlusserzeuger auf.

Derartige Ballenpressen sind beispielsweise aus der WO 93/13988 bekannt. Anwendbar sind sie im Bereich der Landwirtschaft, um beispielsweise Stroh oder Heu zu Ballen zu pressen. Derartige Ballenpressen können jedoch auch stationär betrieben werden. In der Landwirtschaft besteht ein Bedarf an hochleistungsfähigen, insbesondere hochverdichtenden, Ballenpressen mit einem hohen Durchsatz an Erntegut und einer hohen Zuverlässigkeit.

Aus der US 2015/0272010 A1 ist eine Ballenpresse für landwirtschaftliches Erntegut der eingangs genannten Art bekannt, die eine Bindeeinrichtung für ein bandförmiges Bindematerial aus einem verschweißbaren oder verklebbaren Kunststoffmaterial zur Umhüllung des zu pressenden Materials aufweist, wobei die Bindeeinrichtung ein das Bindematerial stoffschlüssig verbindenden Stoffschlusserzeuger aufweist. Hierbei bereitet jedoch die Verbindung der zu verschweißenden oder zu verklebenden bandförmigen Bindematerialenden Probleme.

Aus der US 2014/0202346 A1 ist eine Ballenpresse bekannt mit einer Bindeeinrichtung, der eine Kühlungseinrichtung zugeordnet ist. Dabei ist jedoch kein bandförmiges Bindematerial im Einsatz.

Aus der WO 2014/144470 ist eine Ballenpresse für landwirtschaftliches Erntegut mit einem Presskanal mit mindestens einer Bindeeinrichtung für ein bandförmiges Bindematerial aus einem verschweißbaren Kunststoffmaterial zur Umhüllung des zu pressenden Ballens bekannt, wobei die Bindeeinrichtung einen das Bindematerial stoffschlüssig verbindenden Stoffschlusserzeuger aufweist, die mittels Reibschweißung miteinander verbunden werden können. Diese Verbindung ist jedoch nur mit einem erhöhten Zeitaufwand herzustellen.

Aufgabe der vorliegenden Erfindung ist es, eine Ballenpresse der eingangs genannten Art zur Verfügung zu stellen, die hinsichtlich ihrer Leistungsfähigkeit und hinsichtlich ihrer Zuverlässigkeit verbessert ist.

Erfindungsgemäß wird diese Aufgabe dadurch gelöst, dass der Bindeeinrichtung mindestens eine eine stoffschlüssige Verbindung des Bindematerials kühlende Kühlungseinrichtung zugeordnet ist, dass die Kühlungseinrichtung als eine einen Luftstrom auf die stoffschlüssige Verbindung des Bindematerials richtende Luftkühlungseinrichtung ausgestaltet ist, dass die Luftkühlungseinrichtung zwei auf die stoffschlüssige Verbindung des Bindematerials gerichtete Düsen und ein daran angeordnetes Zuführelement umfasst und dass eine erste Düse auf eine Schmalseite des Querschnitts des stoffschlüssig verbundenen bandförmigen Bindematerials gerichtet angeordnet ist und eine weitere Düse auf die gegenüberliegende Schmalseite des Querschnitts des stoffschlüssig verbundenen bandförmigen Bindematerials gerichtet angeordnet ist.

Die Kühlungseinrichtung kühlt die Stelle, an der das Bindematerial stoffschlüssig verbunden worden ist. Das Aushärten der stoffschlüssigen Verbindung des Bindematerials nach Erzeugung der Verbindung als Teil eines Bindezyklus wird somit beschleunigt und die für den Bindezyklus nötige Zeitdauer reduziert. Der Bindezyklus beschreibt den Vorgang, durch den die Bindeeinrichtung das einen Ballen nach seiner fertigen Pressung umhüllende Bindematerial verbindet. Eine geringere für den Bindezyklus nötige Zeitdauer ermöglicht ein besonders schnelles Pressen des Ernteguts und somit eine Erhöhung der Leistungsfähigkeit der Ballenpresse. Die Kühlung der stoffschlüssigen Verbindung dient zudem der Erhöhung der Zuverlässigkeit dieser Verbindung und damit der Ballenpresse. Die Leistungsfähigkeit der Ballenpresse wird durch den schneller stattfindenden Bindezyklus gesteigert.

Vorzugsweise weist der Stoffschlusserzeuger eine mindestens zwei Bereiche des Bindematerials verschweißende Schweißeinrichtung auf. Die zwei Bereiche des Bindematerials sind beim Verschweißen jeweils mit der Längsseite ihres Querschnittes zumindest teilweise aneinander anliegend angeordnet. Hierdurch wird eine große Auflagefläche und Verbindungsfläche der stoffschlüssigen Verbindung erreicht. Die Verwendung einer Schweißeinrichtung als Stoffschlusserzeuger ermöglicht die zügige und zuverlässige Erzeugung einer stoffschlüssigen Verbindung. Hierdurch kann die stoffschlüssige Verbindung mit einem Bindezyklus, der nur kurze Zeitdauer benötigt, erzeugt werden. Somit kann die Anzahl der in einer vorgegebenen Zeit gebundenen Ballen und somit die Leistungsfähigkeit der Ballenpresse erhöht werden.

Besonders bevorzugt sind die zwei Bereiche des Bindematerials so angeordnet, dass die eine Längsseite des Querschnittes des Bindematerials auf der anderen Längsseite des Querschnittes desselben Bindematerials liegt. Somit wird die stoffschlüssige Verbindung im Wesentlichen durch Spannungen in der Ebene der Verbindung beansprucht, die durch eine stoffschlüssige Verbindung besonders gut aufgenommen werden können. Die Form der Anordnung der zwei zu verschweißenden Bereiche des Bindematerials während des Verschweißens erhöht somit die Festigkeit der stoffschlüssigen Verbindung und ermöglich somit höhere Dichten der Ballen und eine zuverlässigere Verbindung. Somit wird eine leistungsfähige und zuverlässige Ballenpresse ermöglicht.

Bevorzugt umfasst die Schweißeinrichtung ein Schweißelement. Die Schweißeinrichtung ist aus einer Schweißstellung bewegbar gegenüber dem Presskanal angeordnet. In der Schweißstellung liegt das Schweißelement an mindestens einem der mindestens zwei zu verschweißenden Bereiche des Bindematerials an. Aus der Schweißstellung, in der die Schweißeinrichtung die mindestens zwei Bereiche des Bindematerials verschweißt, wird die Schweißeinrichtung nach Fertigstellung der Verbindung herausbewegt. Die Bewegbarkeit der Schweißeinrichtung ermöglicht eine einfache Führung des bandförmigen Bindematerials. Das Bindematerial kann zur Umhüllung des Ballens zügig um diesen herum geführt werden. Nach der Erzeugung der stoffschlüssigen Verbindung kann das verschweißte Bindematerial einfach von der Schweißeinrichtung getrennt werden. Die vereinfachte Handhabbarkeit führt zu einer Verkürzung des Bindezyklus und damit zu einer Erhöhung der Leistungsfähigkeit der Ballenpresse.

Die Kühlungseinrichtung ist so ausgestaltet, dass sie mindestens einen Bereich des zu verschweißenden Bindematerials kühlt, der in der Schweißstellung der Schweißeinrichtung am Schweißelement anliegt. Dadurch wird sichergestellt, dass die Kühlung der stoffschlüssigen Verbindung des zu verschweißenden Bindematerials auf effektive Weise erfolgt. Die Verbindung kann so besonders schnell Aushärten, wodurch die Dauer des Bindezyklus verkürzt und die Leistungsfähigkeit der Ballenpresse verbessert werden.

In einer vorteilhaften Ausgestaltung der Erfindung umfasst die Schweißeinrichtung ein in der Schweißstellung an mindestens einem der mindestens zwei zu verschweißenden Bereiche des Bindematerials anliegende Schweißklemmeneinrichtung. Die mindestens zwei zu verschweißenden Bereiche des Bindematerials werden in der Schweißstellung zwischen der Schweißklemmeinrichtung und einem Schwenkelement geklemmt, welches an mindestens einem der mindestens zwei zu verschweißenden Bereiche des Bindematerials anliegt. Das Klemmen vermindert eine unbeabsichtigte Relativbewegung zwischen den mindestens zwei zu verschweißenden Bereichen des Bindematerials im Bereich der Schweißeinrichtung. Die zu verschweißenden Bereiche werden so ausgerichtet, dass eine große Überlappung insbesondere in einer Richtung quer zu einer Längsrichtung des Bindematerialquerschnitts gewährleistet ist. Hierdurch wird sichergestellt, dass die Fläche der Verbindungsstelle möglichst groß ist. Hierdurch wird eine hohe Festigkeit der stoffschlüssigen Verbindung erzielt, die höhere Dichten der Ballen und eine zuverlässigere Verbindung ermöglicht. Dies führt zu einer zuverlässigeren und leistungsfähigeren Ballenpresse.

Vorzugsweise ist die Schweißeinrichtung um eine Schweißeinrichtungsschwenkachse schwenkbar und dadurch aus der Schweißstellung bewegbar angeordnet. Die Schweißeinrichtungsschwenkachse ist im Wesentlichen ortsfest gegenüber dem Presskanal und zu einer Längsmittelachse des Presskanals im Wesentlichen parallel angeordnet. Die Bewegung um eine Schweißeinrichtungsschwenkachse ermöglicht eine zügige Bewegung der Schweißeinrichtung sowie ein zuverlässiges Erfassen des Bindematerials. Dies ermöglicht eine Reduzierung des für einen Bindezyklus benötigten Zeitintervalls. Weiterhin ist durch diese Anordnung der Schweißeinrichtung ihre Bewegbarkeit auf einfache Weise steuerbar und die Schweißeinrichtung einfach lagerbar. Zudem wird der Bauteilverschleiß durch diese Bewegung der Schweißeinrichtung reduziert. Hierdurch wird die Zuverlässigkeit und Leistungsfähigkeit der Ballenpresse erhöht.

Bevorzugt ist die Schweißeinrichtung als Reibschweißeinrichtung ausgestaltet, welche zwei Bereiche des Bindematerials durch Reibschweißen verschweißt. Die Reibschweißeinrichtung ermöglicht einen gezielten und zügigen Energieeintrag in die Schweißstelle. Hierdurch kann die für den Schweißvorgang benötigte Zeit und damit die Dauer des Bindezyklus reduziert werden. Es können mehr Ballen pro Zeit gepresst und gebunden werden. Weiterhin reduziert der gezielte Energieeintrag des Reibschweißens die thermische Belastung benachbarter Bauteile, was zu einem geringen Verschleiß der Bindeeinrichtung führt. Somit wird die Verfügbarkeit und die Leistungsfähigkeit der Ballenpresse erhöht.

Besonders bevorzugt umfasst die Reibschweißeinrichtung einen das Schweißelement antreibenden Druckluftmotor. Durch diese Art des Antriebs ist die Reibschweißeinrichtung besonders zuverlässig, da ein Druckluftmotor im Vergleich zu anderen verwendbaren Motortypen besonders einfach aufgebaut ist und das Arbeitsfluid frei in der Umgebung verfügbar ist. Damit gehen eine Reduzierung der Ausfallzeiten der Ballenpresse und damit eine Steigerung ihrer Leistungsfähigkeit einher.

Die Kühlungseinrichtung ist als Luftkühlungseinrichtung ausgestaltet, die einen Luftstrom auf die stoffschlüssige Verbindung richtet. Durch diese Ausgestaltung der Kühlungseinrichtung funktioniert sie kontaktlos und mit einem frei in der Umgebung verfügbaren Kühlmedium. Das Anströmen der stoffschlüssigen Verbindung mit einem Luftstrom ermöglicht durch die Konvektion eine zügige und zuverlässige Abführung der Wärme. Die Zeit bis zum Aushärten der stoffschlüssigen Verbindung wird somit verkürzt und die Leistungsfähigkeit der Ballenpresse gesteigert. Die Wechselwirkungen mit den benachbarten Komponenten der Schweißeinrichtung sind minimal, ebenso wie der Wartungsaufwand für die Kühlungseinrichtung. Das führt zu einer höheren Verfügbarkeit und damit Leistungsfähigkeit der Ballenpresse.

Die Luftkühlungseinrichtung umfasst mindestens zwei auf die stoffschlüssige Verbindung gerichtete Düsen. Dadurch kann die zur Kühlung verwendete Luft effizient an genau den Bereich des bandförmigen Bindematerials gebracht werden, in dem die Kühlung erwünscht ist und die die Wärme abführende Luft hat nur eine kurze Verweilzeit im Bereich der stoffschlüssigen Verbindung und wird effizient zur Kühlung genutzt. Die Zeit bis zum Aushärten der stoffschlüssigen Verbindung wird somit verkürzt und die Leistungsfähigkeit der Ballenpresse gesteigert. Die Leistungsaufnahme der Kühlungseinrichtung ist auf ein Mindestmaß reduziert, wodurch die Leistungsfähigkeit der gesamten Ballenpresse erhöht werden kann.

Die Luftkühlungseinrichtung hat zwei auf die stoffschlüssige Verbindung der mindestens zwei zu verschweißenden Bereiche des Bindematerials gerichtete Düsen. Die erste Düse ist dabei auf eine Schmalseite der Querschnittsfläche des stoffschlüssig verbundenen bandförmigen Bindematerials gerichtet. Eine weitere Düse ist auf die gegenüberliegende Schmalseite der Querschnittsfläche des stoffschlüssig verbundenen bandförmigen Bindematerials gerichtet. Durch die Mehrzahl an Düsen, welche auf gegenüberliegende Bereiche des stoffschlüssig verbundenen bandförmigen Bindematerials gerichtet sind, kann die Leistungsfähigkeit der Kühlung erhöht und damit ihre Kühlungsdauer reduziert werden. Die kühlende Luft wird an mindestens zwei an die stoffschlüssige Verbindung grenzende Oberflächen des Bindematerials geleitet, wovon die Kühlung der Verbindung ausgeht. Folge der Minimierung der nötigen Dauer der Kühlung als Teil des Bindezyklus ist eine Steigerung der Leistungsfähigkeit der Ballenpresse.

In vorteilhafter Ausgestaltung der Erfindung umfasst die Luftkühlungseinrichtung ein Zuführelement, das Druckluft zuführt. Dadurch ist eine verlustarme und zuverlässige Zuleitung der Luft zu den Düsen möglich, was dafür sorgt, dass die für die Bereitstellung der Druckluft an den Düsen benötigte Leistung minimal ist. Dadurch steigt wiederum die Leistungsfähigkeit der Ballenpresse.

Vorzugsweise umfasst die Luftkühlungseinrichtung eine Regelvorrichtung, die die Druckluftzufuhr zum Druckluftmotor und zur Luftkühlungseinrichtung regelt. Durch diese Regelvorrichtung kann die Druckluft weitgehend verlustfrei und mit hoher zeitlicher Präzision zunächst zum Druckluftmotor, der die Reibschweißeinrichtung antreibt, und daraufhin zum Zuführelement geleitet werden. Die Regelvorrichtung ermöglicht somit die Verwendung von nur einer Druckluftquelle.

Besonders bevorzugt umfasst die Regelvorrichtung ein Umschaltventil, welches die Luftzufuhr zwischen dem Druckluftmotor und der Luftkühlungseinrichtung umschalten kann. Durch die Verwendung dieses Umschaltventils kann die zeitliche Abfolge des Schweißens und des Kühlens optimal geregelt werden. Die Kühlung setzt präzise in dem Moment ein, in dem der Leistungseintrag durch die Schweißvorrichtung endet. Die Schweißeinrichtung bleibt dabei in der Schweißstellung geschlossen. Ein Zeitverlust bis zum Einsetzten der Luftkühlung wird vermieden. Die Zykluszeit des Bindezyklus kann reduziert werden. Dadurch ist die Leistungsfähigkeit der Ballenpresse gesteigert.

In vorteilhafter Ausgestaltung der Erfindung umfasst die Regelvorrichtung einen Sensor, der eine Maschinenposition erfasst und die Umschaltung des Umschaltventils auslöst. Die zu messende Maschinenposition bezieht sich dabei auf die relative Position eines oder mehrerer Elemente der Ballenpresse. Die Maschinenposition kann dabei an unterschiedlichen Stellen der Ballenpresse gemessen werden. Ein solcher Sensor, der das Umschalten des Umschaltventils abhängig von der Maschinenposition durch einen elektrischen Impuls auslöst, ermöglicht, den Zeitpunkt der Umschaltung des Druckluftstroms zu optimieren. Der ist insofern entscheidend, als dass davon sowohl die Dauer des Schweißens als auch die Dauer der Kühlung im Bindezyklus abhängt. Durch die Möglichkeit einer exakten Steuerung des Umschaltventils können beide Mindestdauern exakt eingehalten werden, wodurch die Einrechnung weiterer Toleranzzeiten unnötig wird. Das führt zu einer Reduzierung der Dauer für den Bindezyklus, und damit zu einer Erhöhung der Leistungsfähigkeit der Ballenpresse.

In einer vorteilhaften Ausgestaltung der Erfindung ist das Schwenkelement, welches zusammen mit der Schweißklemmeinrichtung zeitweilig die zwei zu verschweißenden Bereiche des Bindematerials klemmt, im Bereich des Stoffschlusserzeugers zwischen Bindematerial und Presskanal einbringbar. Außerdem ist es um eine Schwenkachse schwenkbar gelagert. Dadurch, dass das Schwenkelement aus dem Bereich zwischen Bindematerial und Presskanal bewegbar ist, wird die Handhabbarkeit des den Ballen umschlingenden Bindematerials vereinfacht. Durch ein Zurückweichen des Schwenkelements aus diesem Bereich muss das Bindematerial nicht aktiv in eine Richtung quer zu seiner Längserstreckung bewegt werden, um es von der Bindeeinrichtung zu lösen und den fertigen Ballen aus der Ballenpresse auszuschieben. Durch das Verschwenken des Schwenkelements kann ein fertig gebundener Ballen schnell freigegeben werden, wodurch der Bindezyklus verkürzt und die Leistungsfähigkeit der Ballenpresse gesteigert werden kann. Durch den einfachen Aufbau des schwenkbaren Schwenkelements als Teil der Bindeeinrichtung wird zudem die Zuverlässigkeit der Ballenpresse erhöht.

Bevorzugt weist die Bindeeinrichtung mindestens ein Gegenschwenkelement auf, das benachbart zum Schwenkelement angeordnet ist. Das Gegenschwenkelement hat eine vom Presskanal abgewandte Oberfläche, die im Wesentlichen in der gleichen Ebene wie eine entsprechende Oberfläche des Schwenkelementes liegt. Die Gegenschwenkachse, um die das Gegenschwenkelement schwenkbar ist, ist parallel zur Schwenkachse positioniert. Durch dieses Gegenschwenkelement wird die Belastung, die durch das Bindematerial auf das zwischen Bindematerial und Presskanal eingebrachte Schwenkelement wirkt, verkleinert, da ein Teil dieser Belastung vom Gegenschwenkelement abgefangen wird. Diese Teilung der Belastung führt zu einer größeren zu erwartenden Lebensdauer des Schwenkelementes. Desgleichen wird der beanspruchte Bauraum optimiert. Durch die Verwendung eines Schwenkelementes und eines Gegenschwenkelementes statt nur eines entsprechend größeren Schwenkelementes ist außerdem das resultierende Massenträgheitsmoment, das den Energiebedarf zum Schwenken mitbestimmt, reduziert. Die Verwendung des Gegenschwenkelements führt zu einer höheren Zuverlässigkeit der beschriebenen Bauteile und einem geringen Leistungsbedarf der Bindeeinrichtung.

Besonders bevorzugt weisen sowohl das Schwenkelement als auch das Gegenschwenkelement einen Teilzahnkreis auf, der wiederum eine Verzahnung aufweist. Die Verzahnung eines Schwenkelementes steht dabei mit der Verzahnung eines Gegenschwenkelementes in Eingriff. Die Teilkreise verlaufen teilweise um die Schwenkachse des entsprechenden Elements, das sie umfasst. Durch die im Eingriff stehenden Verzahnungen wird eine Schwenkbewegung des Schwenkelementes unmittelbar und ohne weitere Bauteile auf das Gegenschwenkelement übertragen, welches dadurch zuverlässig eine äquivalente Schwenkbewegung ausführt. Die Beschränkung der Anzahl der Bauteile führt außerdem zu einer Beschränkung des Risikos eines Ausfalls der Bindeeinrichtung und macht die Ballenpresse damit zuverlässiger.

In einer vorteilhaften Ausgestaltung der Erfindung beträgt der Schwenkwinkel des Schwenkelementes weniger als 90°. Durch einen solchen kleinen Schwenkwinkel sind ein schnelles Einbringen und eine einfache Form der Führung des Schwenkelements in den Bereich zwischen Bindematerial und Presskanal möglich. Durch das schnelle Einbringen kann der Bindezyklus verkürzt und damit die Leistungsfähigkeit der Presse erhöht werden.

Vorzugsweise weist die Bindeeinrichtung eine vordere Klemmvorrichtung und eine hintere Klemmvorrichtung auf. Die vordere Klemmvorrichtung ist dabei zwischen einem innerhalb des Presskanals angeordneten und entlang dessen Längsmittelachse bewegbaren Presskolben und dem Stoffschlusserzeuger angeordnet. Die hintere Klemmvorrichtung ist auf der vom Presskolben abgewandten Seite des Stoffschlusserzeugers angeordnet. Dadurch, dass der Stoffschlusserzeuger zwischen zwei separaten Klemmvorrichtungen angeordnet ist, kann in einem Bindezyklus das erste zu klemmende Bindematerialende, welches während des Pressens eines ersten Ballens von der vorderen Klemmvorrichtung geklemmt ist, freigegeben und von der hinteren Klemmvorrichtung geklemmt und in Position gehalten werden. Dadurch wird ein Führen des zweiten zu verschweißenden Bindematerialendes aus Richtung des Presskolbens zwischen das Schweißelement und das Schwenkelement ermöglicht, ohne dass dabei ein Bauteil außer dem Schwenkelement und dem Gegenschwenkelement zwischen dem Bindematerial und dem Presskanal liegt. Voraussetzung dafür ist die Öffnung der vorderen Klemmvorrichtung, die ansonsten die Führung des zweiten Bindematerialendes zum Stoffschlusserzeuger blockieren würde. Die vordere Klemmvorrichtung ist in der Folge wiederum nötig, um das erste Bindematerialende zur Umschlingung des folgenden zu pressenden Ballens zu klemmen, wovon ein Teil sich mit wachsendem Ballen in den Bereich der Stoffschlusseinrichtung verlagert.

Das erste Bindematerialende zur Umschlingung des folgenden zu pressenden Ballens schließt sich vor einer Trennung der Bindematerialabschnitte an das zweite Bindematerialende des ersten zu pressenden Ballen an. Durch die Verwendung zweier Klemmvorrichtungen, die in Umschlingungsrichtung vor und hinter dem Stoffschlusserzeuger angeordnet sind, ist die Bewegung einer das Bindematerial klemmenden Klemmvorrichtung nicht nötig und die nötigen Bewegungen der Klemmvorrichtungen sind auf ein Mindestmaß beschränkt. Die Bewegungen können daher besonders schnell erfolgen und die Zykluszeit des Bindezyklus verringert werden. Die Leistungsfähigkeit der Ballenpresse ist damit erhöht. Zudem gibt es wenige durch Relativbewegungen verschleißbehaftete Bauteile und eine erhöhte Zuverlässigkeit der Ballenpresse.

In vorteilhafter Ausgestaltung der Erfindung weist die vordere Klemmvorrichtung eine Schneidvorrichtung auf. Die Schneidvorrichtung trennt während des Bindezyklus das bandförmige Bindematerial, wodurch zum einen ein zweites Bindematerialende für den ersten zu pressenden Ballen und zum anderen ein erstes Bindematerialende für den folgenden zu pressenden Ballen entsteht. Als Teil der vorderen Klemmvorrichtung kann die Schneidvorrichtung besonders einfach ausgestaltet werden und die Anzahl der einzeln anzusteuernden Vorrichtungen wird reduziert. Durch diese Verwendung nur einer entsprechenden Mindestzahl von Bauteilen für die Schneidvorrichtung wird eine erhöhte Zuverlässigkeit der Bindeeinrichtung und damit der Ballenpresse erreicht.

Vorzugsweise weist die vordere Klemmvorrichtung einen Schneidarm und einen Klemmarm auf. Hierdurch kann das Klemmen und das Schneiden des Bindematerials nacheinander stattfinden. Somit kann sichergestellt werden, dass das Bindematerial zuverlässig eingeklemmt ist, bevor es geschnitten wird.

Bevorzugt ist der Klemmarm relativ zu dem Schneidarm verschieblich angeordnet. Der Klemmarm klemmt das Bindematerial beim Schließen der vorderen Klemmvorrichtung ein und ist dadurch festgelegt. Durch den verschieblich angeordneten Schneidarm kann ein Schneiden des Bindematerials erfolgen, nachdem der Klemmarm festgelegt wurde. Hierdurch kann ein Schneiden des Bindematerials bei festgelegtem Bindematerial ermöglicht werden, wodurch die Zuverlässigkeit der Ballenpresse erhöht wird.

Besonders bevorzugt ist der Klemmarm an dem Schneidarm beim Übergang der vorderen Klemmvorrichtung in eine Klemmstellung voreilend angeordnet. Durch das Voreilen wird sichergestellt, dass der Klemmarm das Bindematerial klemmt, bevor dieses in einem angrenzenden Bereich vom Schneidarm durchtrennt werden kann. Dies erhöht die Zuverlässigkeit der Ballenpresse, da ein Schneiden des Bindematerials bei geklemmtem Bindematerial zuverlässiger funktioniert.

Besonders bevorzugt ist zwischen dem Klemmarm und dem Schneidarm ein eine Kraft vom Schneidarm auf den Klemmarm übertragendes Federelement angeordnet. Hierdurch ist es möglich, Schneidarm und Klemmarm gemeinsam anzutreiben. Die Konstruktion ist bei dieser Ausgestaltung der vorderen Klemmvorrichtung vereinfacht und ermöglicht es, sicherzustellen, dass das Klemmen des Bindematerials jederzeit zuverlässig erfolgt. Dies erhöht die Zuverlässigkeit der Ballenpresse.

Bevorzugt ist am Schneidarm eine gezahnte Klinge angeordnet. Die Verwendung einer gezahnten Klinge erleichtert aufgrund der nacheinander das Bindematerial kontaktierenden Bereiche der Schneide das Durchtrennen des Bindematerials und reduziert den dazu nötigen Kraftaufwand. Die Gefahr von Ausfällen der Ballenpressen wegen nicht ordnungsgemäß durchtrenntem Bindematerial wird reduziert. Dies steigert die Leistungsfähigkeit der Ballenpresse.

Vorteilhafterweise ist an der vorderen Klemmvorrichtung ein Niederhalter schwenkbar angeordnet. Wenn die vordere Klemmvorrichtung das geklemmte Ende des Bindematerials freigibt, um einem weiteren Abschnitt des Bindematerials, das dem Stoffschlusserzeuger zugeführt wird, auszuweichen, kann ein schwenk-bar angeordneter Niederhalter das freigegebene Ende des Bindematerials in Richtung des Presskanals bewegen und in dieser Position halten. Hierdurch wird sichergestellt, dass die Abschnitte des Bindematerials, die in dem Stoffschlusserzeuger überlappen sollen, im Bereich des Stoffschlusserzeugers optimal positioniert sind. Ein Wegbewegen des Bindematerials, das zuvor in der vorderen Klemmvorrichtung geklemmt war, aufgrund einer Verformung des Bindematerial wird durch den Niederhalter vermieden. Der dem Stoffschlusserzeuger zugeführte zweite Bindematerialabschnitt kann somit auch mit höher Geschwindigkeit über den zuvor in der vorderen Klemmvorrichtung festgeklemmten Abschnitt des Bindematerials hinweggeführt werden. Hierdurch kann die Zykluszeit des Bindezyklus verringert und die Leistungsfähigkeit der Ballenpresse erhöht werden. Zudem wird durch die Sicherstellung der Bindematerialpositionierung die Zuverlässigkeit der stoffschlüssigen Verbindung erhöht.

Besonders bevorzugt ist der Niederhalter um eine Niederhalterschwenkachse schwenkbar, die gegenüber einer zur Längsmittelachse des Presskanals senkrechten Ebene durch einen Anschlagpunkt des Niederhalters eine Neigung zwischen 20 und 40° aufweist. Der um eine gegenüber einer senkrechten Ebene durch einen Anschlagspunkt des Niederhalters gekippten Niederhalterschwenkachse schwenkbare Niederhalter kann das zuvor in der vorderen Klemmvorrichtung geklemmte Ende des Bindematerials in Richtung des Presskanals bewegen und dabei gleichzeitig in einem gewissen Umfang straffen, bevor er das Bindematerial in dieser niederen Position hält. Vor allem jedoch kann ein Niederhalter, der um die beschriebene Niederhalterschwenkachse schwenkbar ist, leichter aus dem verbundenen und einen Ballen umhüllenden Bindematerial entfernt werden. Wenn das Bindematerial im Stoffschlusserzeuger miteinander verbunden wird, ergibt sich eine durchgehende Umhüllung des Ballens. Der Niederhalter ist in diesem Moment zwischen dem Bindematerial und dem Ballen befindlich. Für das Ausschieben des Ballens aus dem Presskanal muss folglich der Niederhalter aus dem Bereich zwischen Ballen und Bindematerial entfernt werden. Durch die geneigte Niederhalterschwenkachse ist dies besonders einfach möglich. Hierdurch wird die Zuverlässigkeit der Ballenpresse erhöht.

Bevorzugt weist die hintere Klemmvorrichtung ein Klemmelement mit Fangzähnen auf. Das Klemmelement steht in Klemmposition in Kontakt mit dem Bindematerial. Die Fangzähne am Klemmelement umgreifen das Bindematerial zu beiden Seiten und zentrieren dieses bezüglich des Klemmelementes. Dies ermöglicht eine verbesserte Ausrichtung des Bindematerials in dem benachbarten Stoffschlusserzeuger. Somit wird sichergestellt, dass die in dem Stoffschlusserzeuger stoffschlüssig zu verbindenden Abschnitte des Bindematerials mit einer größtmöglichen Fläche aneinander anliegen. Die stoffschlüssige Verbindung erhält zuverlässig eine großflächige Ausprägung, wodurch die Haltbarkeit und Belastbarkeit der Verbindungsstelle erhöht wird. Dies ermöglicht hohe Zugfestigkeiten und damit mögliche Pressdichten der zu umschlingenden Ballen und somit eine erhöhte Leistungsfähigkeit der Ballenpresse.

Vorzugsweise ist der hinteren Klemmvorrichtung das Gegenschwenkelement zugeordnet, wobei das Gegenschwenkelement die Fangzähne in einer Klemmposition aufnehmende Aussparungen aufweist. Die das Bindematerial in einer Klemmposition gegenüber dem Klemmelement zentrierenden Fangzähne können in die Aussparungen des Gegenschwenkelementes eintauchen. Hierdurch wird die Zentrierwirkung der Fangzähne verbessert und gleichzeitig ein sicheres Klemmen sichergestellt. Die Zuverlässigkeit der Ausrichtung des Bindematerials in einem Stoffschlusserzeuger mit den oben genannten Vorteilen für die Festigkeit der Verbindung sowie die Leistungsfähigkeit der Ballenpresse wird verbessert.

Vorteilhafterweise ist die vordere Klemmvorrichtung in der Klemmstellung ortsfest und lagefixiert an der Ballenpresse abgestützt. Der vorderen Klemmvorrichtung ist eine Umlenkeinrichtung zugeordnet, um die der Endbereich des bandförmigen Bindematerials in der Klemmstellung der vorderen Klemmvorrichtung U-, C- oder L-förmig geführt ist. Hierdurch wird ein Bewegen der vorderen Klemmvorrichtung, während sie in der Klemmstellung einen Endbereich des bandförmigen Bindematerials klemmt, unnötig. Dadurch kann die vordere Klemmvorrichtung ortsfest gegenüber dem Presskanal abgestützt sein. Die vordere Klemmvorrichtung kann somit einfacher und damit zuverlässiger ausgestaltet werden, wodurch die Zuverlässigkeit der Ballenpresse erhöht ist.

Besonders bevorzugt ist die vordere Klemmvorrichtung das Bindematerial zumindest zu Beginn des Bindezyklus zwischen 140 und 200°, vorzugsweise zwischen 170 und 180°, umlenkend ausgestaltet. Der in der vorderen Klemmvorrichtung geklemmte Bereich des Bindematerials erfährt um die vordere Klemmvorrichtung herum eine Umlenkung, sodass sich ein anschließender Bereich des Bindematerials in die entgegengesetzte Richtung erstreckt. Dadurch wird vermieden, dass die vordere Klemmvorrichtung in der Klemmstellung gedreht werden muss, um eine Parallelität der genannten Bereiche des Bindematerials zu ermöglichen. Hierdurch kann die vordere Klemmvorrichtung besonders einfach konstruiert werden. Durch das ortsfeste Klemmen eines zur Längsmittelachse im Wesentlichen parallelen Bindematerialabschnittes ist die vordere Klemmvorrichtung mit robusten Bauteilen gegenüber dem Presskanal abstützbar. Zudem wird durch die Reibung des Bindematerials an der Umlenkeinrichtung die Haltekraft der vorderen Klemmvorrichtung vergrößert. Dies führt zu einer zuverlässigeren Ballenpresse.

Bevorzugt sind die Umlenkeinrichtung und ein in Klemmstellung der vorderen Klemmvorrichtung am bandförmigen Bindematerial anliegender und von der vorderen Klemmvorrichtung umfasster Gegenhalter einteilig ausgestaltet. Durch die einteilige Ausgestaltung von Umlenkeinrichtung und Gegenhalter, auf den die vordere Klemmvorrichtung das Bindematerial in der Klemmstellung klemmt, kann die Anzahl der Bauteile der vorderen Klemmvorrichtung reduziert werden. Die vordere Klemmvorrichtung ist dadurch mechanisch weiter vereinfacht und dadurch prinzipiell weniger fehleranfällig. Die Zuverlässigkeit der Ballenpresse wird somit erhöht.

Vorteilhafterweise ist die vordere Klemmeinrichtung die Enden des bandförmigen Bindematerials in zwei aufeinanderfolgenden Bindezyklen nacheinander klemmend ausgestaltet. Dies bedeutet, dass die vordere Klemmvorrichtung zu Beginn jedes Bindezyklus das Ende des bandförmigen Bindematerials klemmt. Es ist somit nur eine vordere Klemmvorrichtung notwendig, die zu Beginn jedes Bindezyklus das Ende des bandförmigen Bindematerials festklemmt. Auf weitere vordere Klemmvorrichtungen kann verzichtet werden. Dies vereinfacht den mechanischen Aufbau der Ballenpresse und erhöht somit die Zuverlässigkeit der Ballenpresse.

In einer bevorzugten Ausführungsform ist der Gegenhalter schwenkbeweglich um eine Gegenhalterschwenkachse angeordnet. Die Gegenhalterschwenkachse ist in einer oder parallel zu einer Vertikalebene positioniert, die senkrecht zu einer Bodenebene des Presskanals ist und die Längsmittelachse des Presskanals umfasst. Außerdem ist die Gegenhalterschwenkachse vorzugsweise im Wesentlichen orthogonal zur Bodenebene positioniert. Die Bodenebene umfasst dabei eine dem Gegenhalter abgewandte und im Wesentlichen ebene Seite des Presskanals. Durch die schwenkbewegliche Anordnung des Gegenhalters kann dieser dem um den zu pressenden Ballen geführten Bindematerial aufgrund der Bindematerialspannung des Bindematerials ausweichen, wenn die vordere Klemmvorrichtung nicht in der Klemmstellung angeordnet ist. Eine Führung der vorderen Klemmvorrichtung in seiner Gesamtheit ist dadurch nicht notwendig. Der schwenkbewegliche Gegenhalter wird ausschließlich durch das in den Bereich des Bindetisches geführte Bandmaterial bewegt. Die aktiv bewegte Masse der vorderen Klemmvorrichtung wird dadurch reduziert und der bauliche Aufwand zur Bewegung der vorderen Klemmvorrichtung verringert. Die beschriebene Ausrichtung der Gegenhalterschwenkachse erleichtert ein bindematerialinduziertes Ausweichen des Gegenhalters und gewährleistet einen einfachen Aufbau der vorderen Klemmvorrichtung. Die Leistungsfähigkeit und die Zuverlässigkeit der Ballenpresse sind somit erhöht.

Besonders bevorzugt weist die vordere Klemmvorrichtung ein Gegenhalterrückstellelement auf, das den Gegenhalter mit einer den Gegenhalter in eine Gegenhalteposition bewegenden Kraft beaufschlagt. Das Gegenhalterrückstellelement bewegt den Gegenhalter, nachdem er dem Bindematerial ausgewichen ist, wieder zurück in eine Gegenhalteposition. In dieser kann er als Konterpart zum Klemmarm der vorderen Klemmvorrichtung fungieren und ein Ende des Bindematerials gegen den Gegenhalter festgelegt werden. Durch die Verwendung eines Gegenhalterrückstellelementes ist eine gezielte Steuerung der Bewegung des Gegenhalters entbehrlich und die Wiederholbarkeit der Klemmung des Bindematerials in der vorderen Klemmvorrichtung sichergestellt. Dies vereinfacht weiterhin den Aufbau der vorderen Klemmvorrichtung und erhöht die Zuverlässigkeit. Die Zuverlässigkeit und Leistungsfähigkeit der Ballenpresse ist somit erhöht.

Vorteilhafterweise weist der Gegenhalter einen als Gegenschneide für die Schneidvorrichtung ausgebildeten Bereich auf. Der Gegenhalter und die Gegenschneide der Schneidvorrichtung sind somit einstückig ausgebildet. Dies verringert den baulichen Aufwand und verringert die Anzahl ausfallrisikobehafteter Bauteile der Ballenpresse. Zudem wird durch das Vorsehen einer Gegenschneide die Zuverlässigkeit des Schneidvorgangs erhöht, das Bindematerial wird besonders zuverlässig getrennt. Hierdurch ist auch die Zuverlässigkeit und Leistungsfähigkeit der Ballenpresse erhöht.

Vorzugsweise weist die vordere Klemmvorrichtung den Klemmarm auf, wobei der Klemmarm und der Gegenhalter eine Fixieranordnung umfassen. Die Fixieranordnung umfasst einen zu einem Teil des Klemmarms komplementär ausgebildeten Bereich am Gegenhalter, durch die der Gegenhalter in der Klemmstellung formschlüssig in der Gegenhalteposition fixierbar ist. Durch die Fixieranordnung wird verhindert, dass der schwenkbewegliche Gegenhalter in der Klemmstellung verschwenkt und dabei die Klemmung des Bindematerials löst. Die Fixieranordnung legt den Gegenhalter relativ zu dem Klemmarm in der Klemmstellung fest. Hierdurch wird die Zuverlässigkeit der Klemmung in der vorderen Klemmvorrichtung erhöht. Dies erhöht die Zuverlässigkeit der Ballenpresse.

In einer vorteilhaften Ausgestaltung umfasst die Bindeeinrichtung mindestens ein an einer von dem Presskanal abgewandten Seite des bandförmigen Bindematerials am Bindematerial anliegendes und gegenüber dem Presskanal ortsfest angeordnetes Bandführungselement. Das Bandführungselement ist in Richtung der Längsmittelachse des Presskanals vom Stoffschlusserzeuger beabstandet. Das Bandführungselement weist die Position des am Bandführungselement anliegenden Abschnitts des Bindematerials in einer Querrichtung, welche parallel zur Längsseite des Bandmaterialquerschnitts ist, begrenzende Führungsabsätze auf. Das Bandführungselement führt das Bindematerial und richtet es aus. Hierdurch kann sichergestellt werden, dass das Bindematerial im Bereich des Stoffschlusserzeugers besser und zuverlässiger ausgerichtet ist. Hierdurch wird eine zuverlässige Führung und Fixierung des Bindematerials im Stoffschlusserzeuger sichergestellt. Dies führt zu einer zuverlässigen Verbindung des Bindematerials im Stoffschlusserzeuger. Die Zuverlässigkeit und Leistungsfähigkeit der Ballenpresse ist damit erhöht.

Vorzugsweise weist das Bandführungselement zu dem den Ballen pressenden Presskolben einen größeren Abstand auf als der Stoffschlusserzeuger zu dem Presskolben. Damit liegt das Bandführungselement auf der Seite des Stoffschlusserzeugers, in dessen Richtung sich das den Ballen umschlingende Bindematerial zwischen zwei Bindezyklen nach und nach weiter erstreckt. Dadurch liegt das Bindematerial vor dem Bindezyklus zuverlässig am Bandführungselement an, wodurch die Zuverlässigkeit der Funktion des Stoffschlusserzeugers und damit der Bindeeinrichtung besonders hoch ist.

Vorteilhafterweise ist das Bandführungselement derart einstellbar, dass der Winkel des zwischen dem Stoffschlusserzeuger und dem Bandführungselement im Wesentlichen geradlinig verlaufenden Bindematerials und der Längsmittelachse des Presskanals veränderbar ist. Hierdurch kann die Ausrichtung des Bindematerials zwischen dem Stoffschlusserzeuger und dem Schwenkelement optimiert werden. Denkbar ist auch, dass bei Verwendung unterschiedlicher Bindematerialien unterschiedliche Einstellungen des Bandführungselementes vorzuziehen sind. Durch die Veränderbarkeit des Bandführungselements kann die Ballenpresse somit auf veränderte Rahmenbedingungen eingestellt und so ein zuverlässiger und leistungsfähiger Betrieb der Ballenpresse sichergestellt werden.

Vorzugsweise umfasst eine Bandführungseinrichtung eine Mehrzahl von Bandführungselementen sowie ein Führungsträgerelement, an das die Bandführungselemente angeordnet sind. Das Zusammenfassen von mehreren Bandführungselementen in einem Führungsträgerelement vereinfacht den Aufbau der Bandführungseinrichtung und führt somit zu einer zuverlässigen Ballenpresse.

Weitere Einzelheiten und Vorteile der Erfindung sind den folgend beschriebenen, schematisch dargestellten Ausführungsbeispielen zu entnehmen. Es zeigen:
- Fig. 1: eine Übersichtsdarstellung eines Ausführungsbeispiels einer erfindungsgemäßen Ballenpresse für landwirtschaftliches Erntegut;
- Fig. 2: eine Übersichtsdarstellung eines Ausführungsbeispiels einer Nadelschwinge sowie eines Antriebselements, des Antriebshebels und der Koppeleinrichtung;
- Fig. 3: eine Seitenansicht der Nadelschwinge gemäß Fig. 2 in Ausgangsstellung an der Ballenpresse;
- Fig. 4: eine Seitenansicht der Nadelschwinge gemäß Fig. 2 zwischen Ausgangsstellung und oberem Totpunkt an der Ballenpresse;
- Fig. 5: eine Seitenansicht der Nadelschwinge gemäß Fig. 2 im oberen Totpunkt an der Ballenpresse;
- Fig. 6: ein Schwenkwinkel-zu-Drehwinkel-Diagramm zur Nadelschwingenbewegung;
- Fig. 7: eine Übersichtsdarstellung eines Ausführungsbeispiels eines Bindetisches mit Bindenadeln der Nadelschwinge gemäß Fig. 2 im oberen Totpunkt;
- Fig. 8: eine Übersichtsdarstellung des Bindetisches zwischen zwei Bindezyklen;
- Fig. 9: eine Übersichtsdarstellung der Ballenpresse nach Fig. 1 mit Abrolleinrichtung;
- Fig. 10: eine Übersichtsdarstellung der Abrolleinrichtung nach Fig. 9 und einer Regeleinrichtung;
- Fig. 11: eine Übersichtsdarstellung der Regeleinrichtung nach Fig. 10;
- Fig. 12: eine Übersichtsdarstellung eines Ausführungsbeispiels eines Bandspeichers;
- Fig. 13: eine schematische Darstellung der Schritte eines Verlaufes eines Bindezyklus mit Veranschaulichung der Stellung der Teile einer Bindeeinrichtung auf einem Bindetisch und zwar beginnend mit Fig. 13a und endend mit Fig. 13i, jeweils in der Ausgangsstellung;
- Fig. 14: eine Übersichtsdarstellung eines Ausführungsbeispiels eines Schwenkelementes inklusive einem Schwenkelementantrieb;
- Fig. 15: eine Übersichtsdarstellung eines Ausführungsbeispiels eines Stoffschlusserzeugers inklusive einem Stoffschlusserzeugerantrieb;
- Fig. 16: eine Übersichtsdarstellung des geöffneten Stoffschlusserzeugers nach Fig. 15;
- Fig. 17: eine Übersichtsdarstellung des geschlossenen Stoffschlusserzeugers nach Fig. 15;
- Fig. 18: eine Übersichtsdarstellung eines Ausführungsbeispiels einer vorderen Klemmvorrichtung inklusive einem ersten Klemmvorrichtungsantrieb;
- Fig. 19: eine Übersichtsdarstellung der geöffneten vorderen Klemmvorrichtung nach Fig. 18;
- Fig. 20: eine Übersichtsdarstellung der geschlossenen vorderen Klemmvorrichtung nach Fig. 18;
- Fig. 21: eine Übersichtsdarstellung der vorderen Klemmvorrichtung nach Fig. 18 mit einem ausweichenden Gegenhalter;
- Fig. 22: eine Übersichtsdarstellung eines Ausführungsbeispiels einer hinteren Klemmvorrichtung inklusive einem zweiten Klemmvorrichtungsantrieb;
- Fig. 23: eine Übersichtsdarstellung der hinteren Klemmvorrichtung nach Fig. 22 mit einem Gegenschwenkelement;
- Fig. 24a: eine Übersichtsdarstellung eines Ausführungsbeispiels einer Kühleinrichtung;
- Fig. 24b: einen schematischen Schaltplan der Kühleinrichtung;
- Fig. 25: eine Übersichtsdarstellung mehrerer Bandführungselemente an einem Führungsträgerelement;

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1.

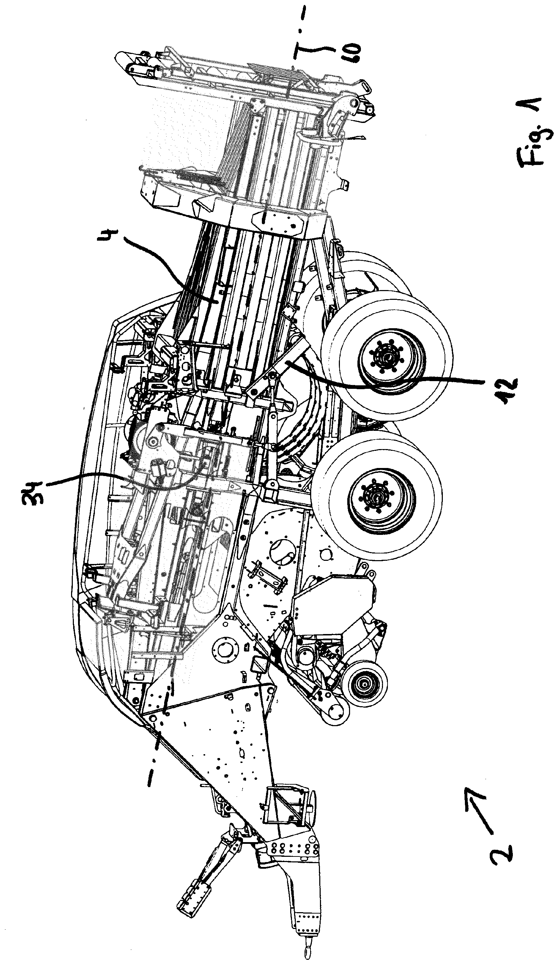

Fig. 1 zeigt eine erfindungsgemäße Ballenpresse 2 für landwirtschaftliches Erntegut. Die Ballenpresse 2 wird im Betrieb an eine landwirtschaftliche Zugmaschine angehängt und presst während der Fahrt mit einem Presskolben 34 kontinuierlich Ballen, die innerhalb eines Presskanals 4 von einem Umschlingungsmittel umhüllt werden und schließlich den Presskanal 4 durch eine vom Presskolben 34 abgewandte Öffnung verlassen. Der Presskanal 4 hat einen rechteckigen Querschnitt, durch dessen Zentrum eine Längsmittelachse des Presskanals 60 verläuft.

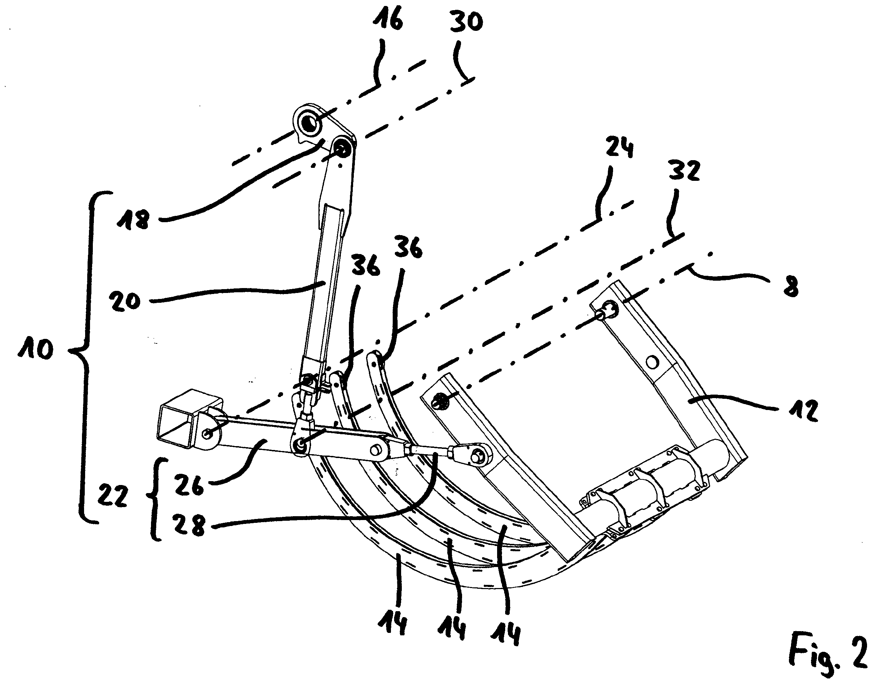

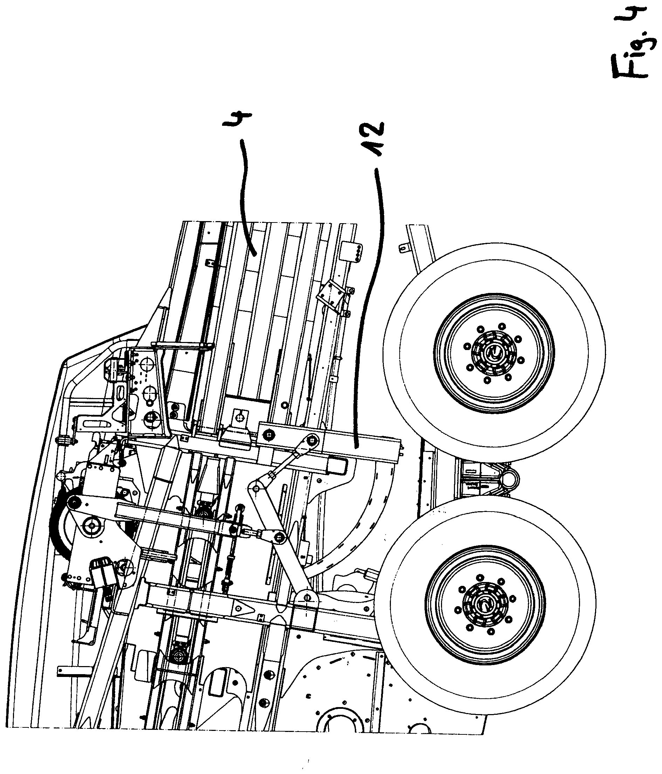

Eine von der Ballenpresse 2 umfasste Nadelschwinge 12 ist in den Fig. 2 bis 5 in unterschiedlichen Positionen dargestellt. Die Nadelschwinge 12 mit Bindenadeln 14 ist schwenkbar um eine Schwingenschwenkachse 8 gelagert. Die Schwingenschwenkachse 8 ist ortsfest gegenüber dem Presskanal 4. Angetrieben wird die Nadelschwinge 12 von einer Antriebsanordnung 10. Die Antriebsanordnung 10 umfasst ein Antriebselement 18, das um eine gegenüber dem Presskanal 4 ortsfeste Antriebsdrehachse 16 drehbar gelagert ist. An dem Antriebselement 18 ist ein Antriebshebel 20 drehbar um eine Antriebshebeldrehachse 30 gelagert.

Der Antriebshebel 20 ist mit der Nadelschwinge 12 über eine Koppeleinrichtung 22 verbunden. Die Koppeleinrichtung 22 umfasst einen ersten Koppelhebel 26 und einen weiteren Koppelhebel 28. Der erste Koppelhebel 26 ist um eine Koppelschwenkachse 24 schwenkbar angeordnet, wobei die Koppelschwenkachse 24 ortsfest gegenüber dem Presskanal 4 ist. Der weitere Koppelhebel 28 ist zum einen wiederum schwenkbar am ersten Koppelhebel 26 angeordnet und zum anderen schwenkbar und von der Schwingenschwenkachse 8 beabstandet an der Nadelschwinge 12 angeordnet. Der Antriebshebel 20 ist dabei schwenkbar um eine Antriebskoppelschwenkachse 32 am ersten Koppelhebel 26 festgelegt.

Die Schwingenschwenkachse 8 liegt in einer Schwingenschwenkachsenebene, zu welcher die Längsmittelachse des Presskanals 60 orthogonal ist. Die Antriebsdrehachse 16, die Antriebshebeldrehachse 30, die Koppelschwenkachse 24 und die Antriebskoppelschwenkachse 32 sind dabei parallel zur Schwingenschwenkachse 8 positioniert.

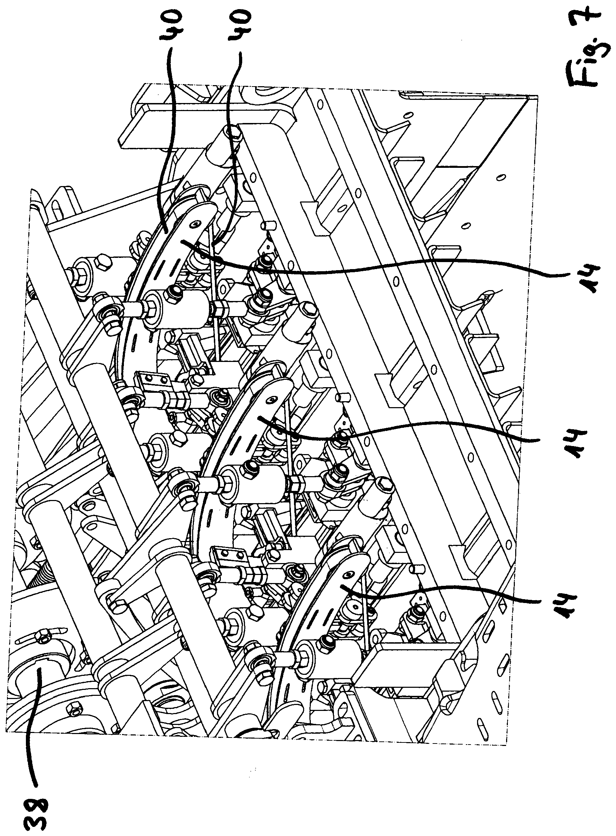

Das Antriebselement 18 ist angeordnet an einer Steuerwelle 38 (vgl. Fig. 7). Diese Steuerwelle 38 steuert mit einer Umdrehung einen Bindezyklus. Während eines Bindezyklus werden zwei Enden eines den gepressten Ballen umhüllenden Umschlingungsmittels miteinander verbunden. Teil des Bindezyklus ist die Führung des Umschlingungsmittels durch den Presskanal 4 anhand der Bindenadeln 14. Die Nadelschwinge 12 weist in Fig. 2 drei Bindenadeln 14 auf. Diese umfassen jeweils eine Führungsrolle 36.

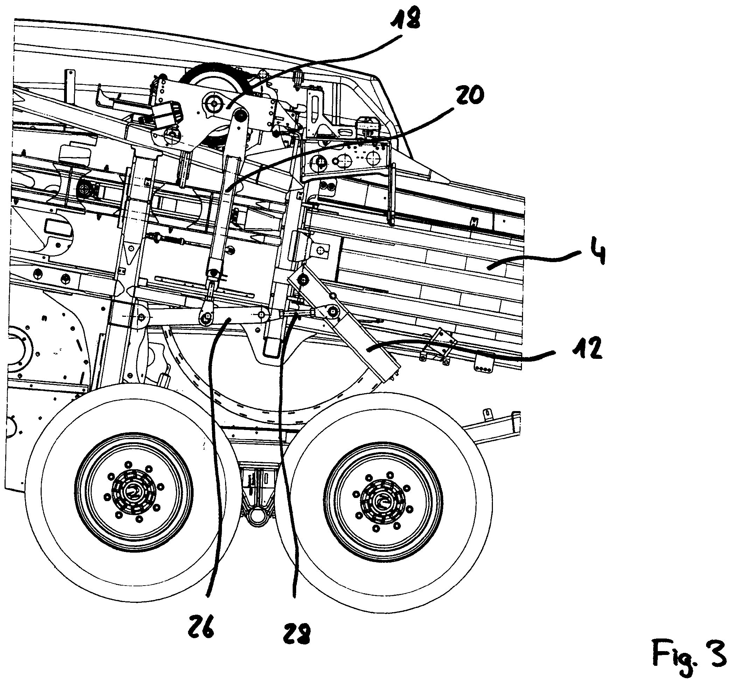

Die Fig. 3 bis 5 zeigen die Nadelschwinge 12 in drei unterschiedlichen Stellungen. In Fig. 3 befindet sich die Nadelschwinge 12 in einer Ausgangsstellung. Dabei liegen die Bindenadeln 14 vollumfänglich außerhalb des Presskanals 4. In dieser Ausgangsstellung befindet sich die Nadelschwinge 12 vor und nach einem jeden Bindezyklus. Kennzeichnend dabei ist, dass die Koppelschwenkachse 24 und der an der Nadelschwinge 12 angeordnete Bereich der Koppeleinrichtung 22 einen maximal möglichen Abstand voneinander haben, d. h., dass die Koppeleinrichtung 22 gestreckt ist. Gleichzeitig liegen die Antriebsdrehachse 16, die Antriebshebeldrehachse 30 und die Koppelschwenkachse 24 nicht in einer Ebene. Antriebselement 18 und Antriebshebel 20 sind als Einheit betrachtet nicht gestreckt.

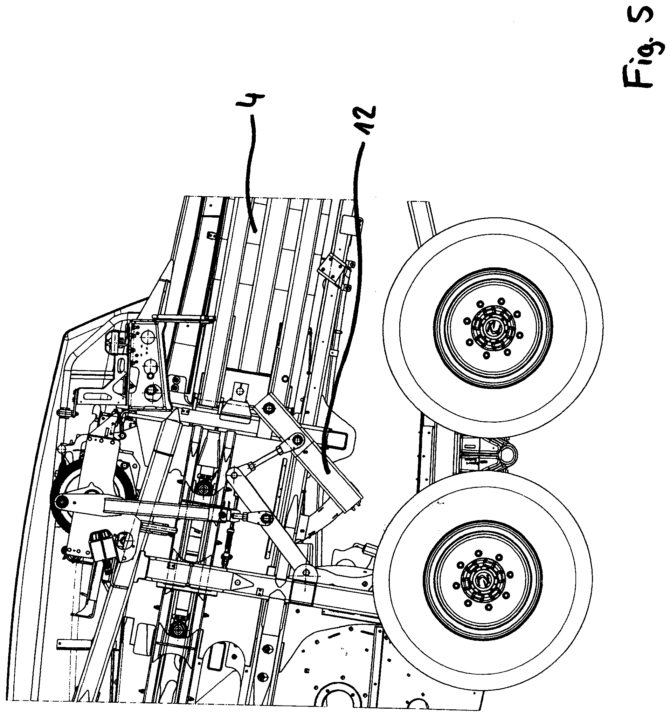

Während eines Bindezyklus wird die Nadelschwinge 12 bei konstanter Winkelgeschwindigkeit des Antriebselementes 18 schneller von der Ausgangsstellung in den oberen Totpunkt der Nadelschwinge 12 (vgl. Fig. 5) geschwenkt, als wenn Antriebselement 18 und Antriebshebel 20 als Einheit in der Ausgangsstellung gestreckt wären.

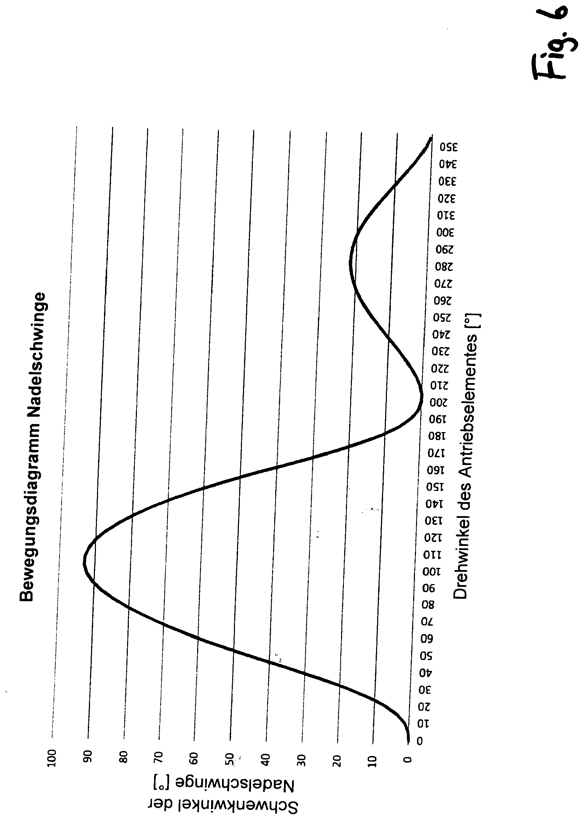

Folge davon ist, dass bei der Rückkehr der Nadelschwinge 12 in die Ausgangsstellung die Koppeleinrichtung 22, nachdem sie bei einem Drehwinkel des Antriebselementes 18 von weniger als 360° bereits gestreckt wurde, erneut zu einem geringeren Maße verkürzt wird. Dabei werden die Bindenadeln 14 nach Abschluss des Bindezyklus erneut zu einem Teil in den Presskanal 4 geführt, bevor die Ausgangsstellung der Nadelschwinge 12 wieder hergestellt ist. Dieser Bewegungsablauf der Nadelschwinge 12 wird durch das Bewegungsdiagramm in Fig. 6 dargestellt. Dabei ist sowohl der Schwenkwinkel der Nadelschwinge 12 als auch der Drehwinkel des Antriebschenkels 18 in der Ausgangsstellung gleich Null.

Fig. 7 zeigt einen Bindetisch der Ballenpresse 2 oberhalb des Presskanals 4. Außerdem sind Teile der drei Bindenadeln 14 dargestellt, die ein bandförmiges Bindematerial 40 führen, während sich die Nadelschwinge 12 im oberen Totpunkt befindet

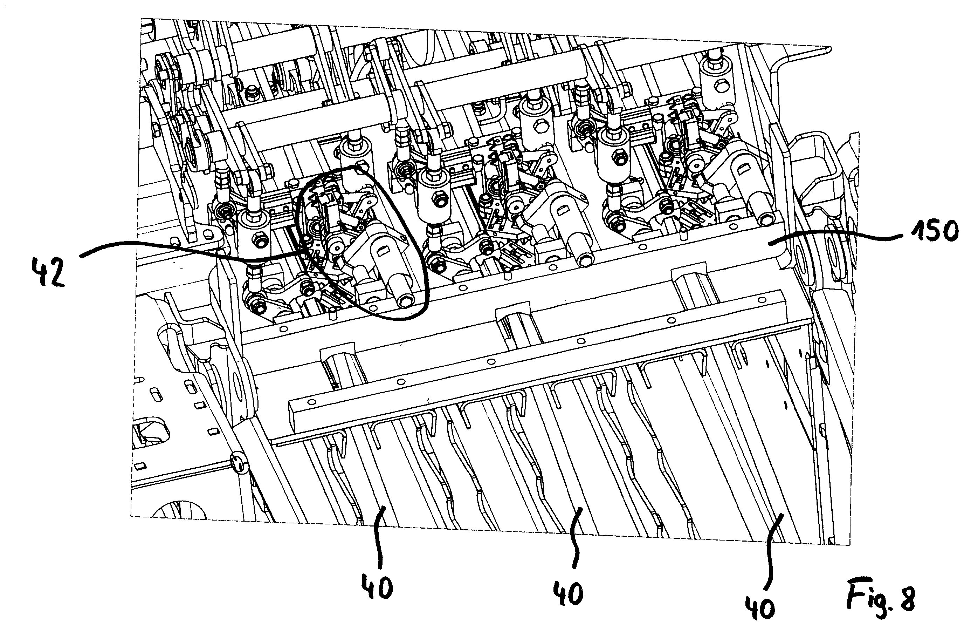

Fig. 8 zeigt eine weitere perspektivische Übersichtsdarstellung des Bindetisches mit drei Stoffschlusserzeugern 42 und den stoffschlüssig zu verbindenden bandförmigem Bindematerial 40. In dieser Darstellung befindet sich die nicht sichtbare Nadelschwinge 12 in der Ausgangsstellung und der Ballen wird durch den Presskolben 34 gepresst. Es ist ein Teil der Bindeeinrichtungen, welcher auf dem Bindetisch angeordnet ist, zwischen zwei Bindezyklen dargestellt.

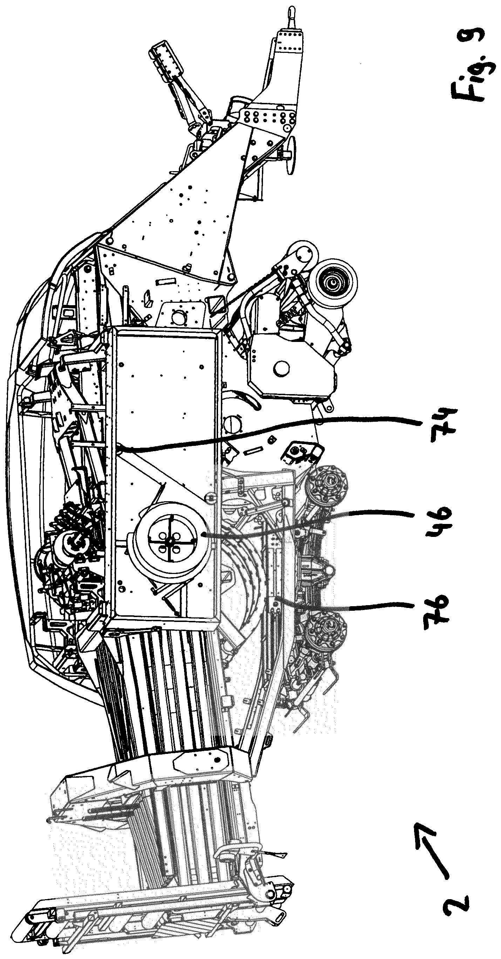

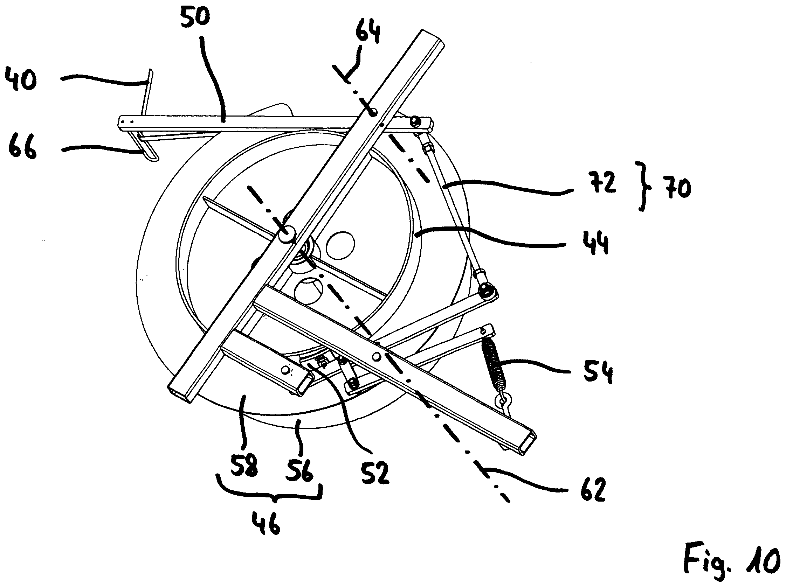

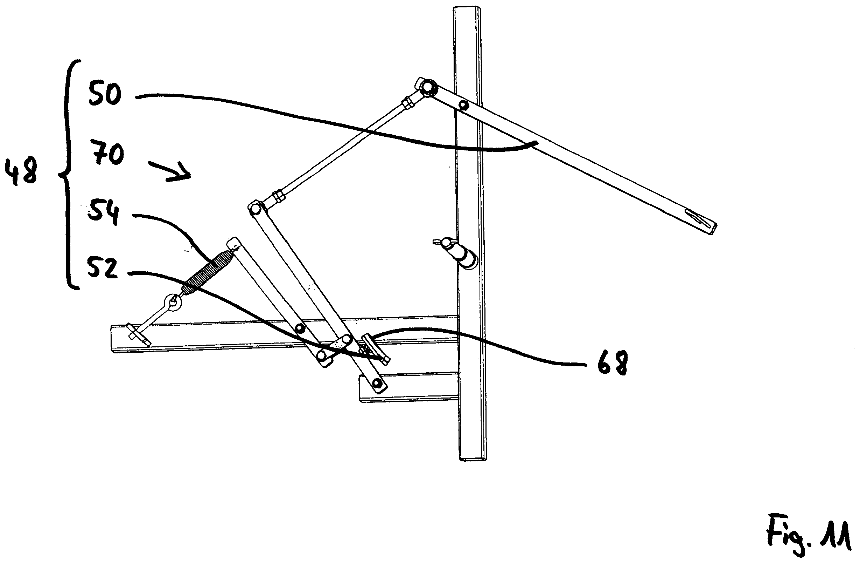

Fig. 9 ist eine Übersichtsdarstellung der erfindungsgemäßen Ballenpresse 2 und zeigt bezüglich der Fig. 1, 3, 4 und 5 ihre gegenüberliegende Seite. An dieser Seite angeordnet ist eine Abrolleinrichtung 46, die ein bandförmiges Bindematerial 40 zur Umhüllung der Ballen bevorratet. Weiterhin sind Teile einer Regeleinrichtung 48 dargestellt, die in den folgenden Fig. 10 und 11 detailliert dargestellt sind. Fig. 10 zeigt gegenüber Fig. 9 die Rückseite der Abrolleinrichtung 46 und der Regeleinrichtung 48. Die Abrolleinrichtung 46 weist eine wechselbare Bandrolle 56 und einen Bandrollenträger 58 auf. Die Abrolleinrichtung 46 ist um eine Abrolldrehachse, welche ortsfest gegenüber dem Presskanal 4 angeordnet ist, drehbar.

Die Abrolleinrichtung 46 weist eine Bremskontaktfläche 44 auf, die die Form einer Kreiszylindermantelfläche hat. In einer Bremsstellung, in der die Regeleinrichtung 48 in Fig. 10 dargestellt ist, liegt an der Bremskontaktfläche 44 ein Bremselement 52 mit einer Bremselementfläche 68 an, welches Teil der Regeleinrichtung 48 ist. Über eine Übertragungsvorrichtung 70 ist das Bremselement 52 mit einem Regelelement 50 verbunden. An dem Regelelement 50 ist ein Führungselement 66 angeordnet, das als Öse ausgebildet ist.

Durch dieses Führungselement 66 verläuft das bandförmige Bindematerial 40, nachdem es von der Abrolleinrichtung 46 abgerollt wurde. Eine Erhöhung der Bandspannung verursacht dabei ein Schwenken des Regelelementes 50 um eine Regelelementschwenkachse 64, die parallel zur Abrolldrehachse 62 positioniert ist. Diese Schwenkbewegung, die von der Übertragungsvorrichtung 70 untersetzt auf das Bremselement 52 übertragen wird, führt zu einem Lösen des Bremselementes 52 mit der Bremselementfläche 68 von der Bremskontaktfläche 44. Durch ein Bremsrückstellelement 54 wird die Übertragungsvorrichtung 70 mit einer entgegen dieser Bewegung wirkenden Kraft beaufschlagt. Bei Nachlassen der Bandspannung bewirkt das Bremsrückstellelement 54 eine Rückführung der Regeleinrichtung 48 in die Bremsstellung.

Zur Einstellung der Sensibilität der Regeleinrichtung 48 ist an das Regelelement 50 ein Steuerhebel 72 angeordnet, der längenverstellbar ist. Fig. 9 zeigt über die Abrolleinrichtung 46 und die Regeleinrichtung 48 hinaus ein Umlenkelement 74, das einen Teil des bandförmigen Bindematerials 40 nach Durchlaufen des Führungselementes 66 umlenkt.

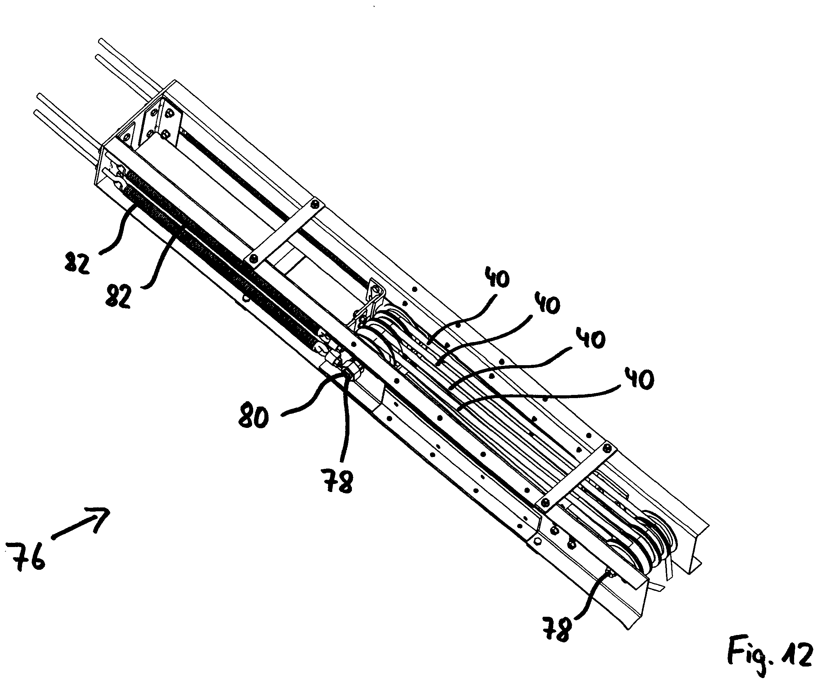

Fig. 9 zeigt unterhalb des Presskanals 4 einen Bandspeicher 76, dem das bandförmige Bindematerial 40, nachdem es von der Abrolleinrichtung 46 abgerollt wurde, zugeführt wird. Dieser Bandspeicher 76 ist in Fig. 12 im Detail dargestellt.

Der Bandspeicher 76 hat zwei Bandspeicherachskörper 78. Auf dem Freiachskörper sind vier, auf dem weiteren Bandspeicherachskörper fünf Rollen angeordnet. Das Bindematerial 40, welches sich zwischen Abrolleinrichtung 46 und Stoffschlusserzeuger 42 befindet, umwickelt die Rollen der Bandspeicherachskörper 78 nach Art eines Flaschenzuges. Dabei umschlingt das bandförmige Bindematerial 40 abwechselnd und jeweils halbseitig den Umfang der Rollen der unterschiedlichen Bandspeicherachskörper 78. Einer der Bandspeicherachskörper 78 ist ein beweglich gelagerter Freiachskörper 80. Dieser wird durch ein Bandspeicherrückstellelement 82 mit einer Kraft beaufschlagt, die eine den Abstand der beiden Bandspeicherachskörper 78 voneinander vergrößernde Bewegung bewirkt. Durch die Vergrößerung des Abstandes vergrößert sich die von Bandspeicher 76 gespeicherte Länge des bandförmigen Bindematerials 40 um ein Vielfaches der Differenz der Abstände der Bandspeicherachskörper 78 vor und nach der Abstandsvergrößerung.

Haben die Bandspeicherrückstellelemente 82 den Abstand der beiden Bandspeicherachskörper 78 allmählich zwischen zwei Bindezyklen erhöht, stellt der Bandspeicher 76 die Menge an bandförmigem Bindematerial 40 bereit, die für eine Bewegung der zugeordneten Bindenadeln 14 an der Nadelschwinge 12 von ihrer Ausgangsstellung bis in den oberen Totpunkt zum Führen des Bindematerials an den Bindetisch erforderlich ist. Gleichzeitig verhindert der Bandspeicher 76 große Beschleunigungen der Abrolleinrichtung 46, da durch die Bandspeicherrückstellelemente 82 das bandförmige Bindematerial 40 nur mit einer moderaten Bandspannung, welche die Regeleinrichtung 48 bewegt, allmählich von der Abrolleinrichtung 46 abgerollt wird.

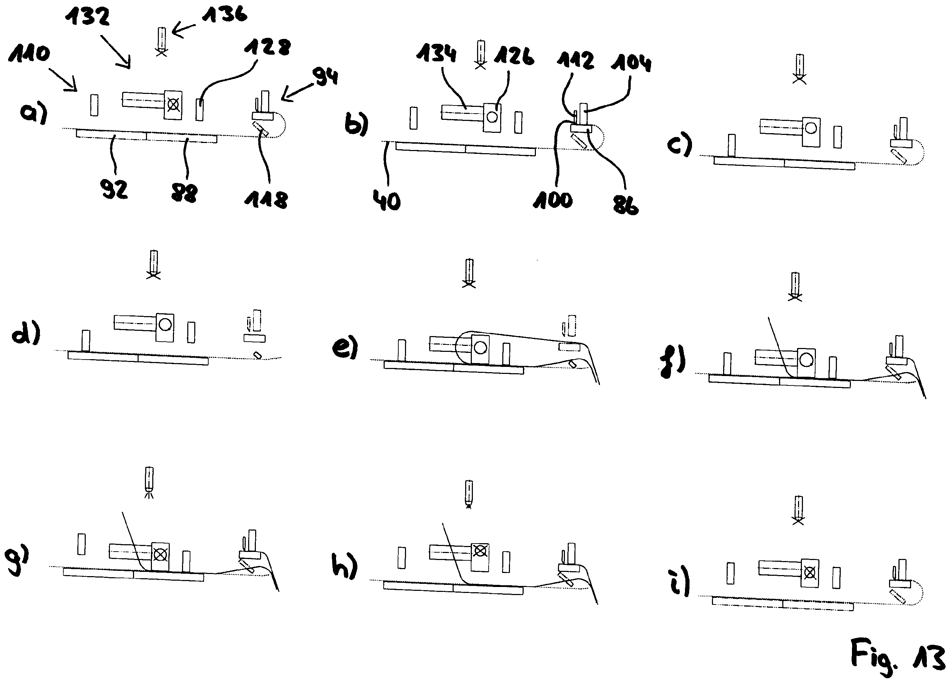

Fig. 13 zeigt eine Serie von Prinzipdarstellungen, die den Ablauf eines Bindezyklus und die Funktion der auf dem Bindetisch angeordneten Komponenten verdeutlicht. Dargestellt sind jeweils eine vordere Klemmvorrichtung 94, eine Schneidvorrichtung 100, ein Gegenhalter 86, ein Niederhalter 118, ein Schwenkelement 88 und ein Gegenschwenkelement 92, eine hintere Klemmvorrichtung 110, eine Reibschweißeinrichtung 132 mit einer Schweißklemmeinrichtung 128 sowie eine Düse 136 der Kühlungseinrichtung.

In den neun Figurteilen 13a bis 13i dargestellt werden jeweils die genannten Komponenten einer Bindeeinrichtung auf dem Bindetisch. Dabei befindet sich gemäß der Darstellungen der Presskolben 34 der Ballenpresse 2 rechts von den dargestellten Komponenten und die Öffnung des Presskanals 4, durch die die gepressten Ballen diesen verlassen, links davon. Ein erstes Ende des bandförmigen Bindematerials 40 ist mit einer gestrichelten Linie, ein weiterer Teil davon mit einer durchgezogenen Linie dargestellt.

Fig. 13a zeigt eine Ausgangsposition der Bindeeinrichtung, in der das bandförmige Bindematerial 40 von der vorderen Klemmvorrichtung 94 geklemmt ist. In dieser Ausgangsposition umschlingt das bandförmige Bindematerial 40 den Gegenhalter 86 U-förmig und erstreckt sich im weiteren Verlauf in Richtung der hinteren oberen Querkante des gepressten Ballens. In dieser Position befinden sich die weiteren dargestellten Komponenten in vom bandförmigen Bindematerial 40 beabstandeten Positionen.

Fig. 13b zeigt, dass das Schwenkelement 88 und das Gegenschwenkelement 92 zu Beginn des Bindezyklus in die dargestellte Bandebene verschwenkt werden. Zuvor (vgl. Fig. 13a) befanden sie sich außerhalb einer Bandebene, in der die Bindeeinrichtung für diese Darstellungen geschnitten ist. Gleichzeitig mit dem Verschwenken des Schwenkelementes 88 und des Gegenschwenkeklementes 92 wird die Reibschweißeinrichtung 132 aktiviert. Dazu wird die Luftzufuhr zu einem die Reibschweißeinrichtung 132 antreibenden Druckluftmotor 134 aktiviert.

Fig. 13c zeigt in einem folgenden Schritt die hintere Klemmvorrichtung 110 abgesenkt und dass sie das bandförmige Bindematerial 40 auf dem Gegenschwenkelement 92 einklemmt. Das ermöglicht, dass sich die vordere Klemmvorrichtung 94 in einem folgenden Schritt (vgl. Fig. 13d) öffnen kann, ohne dass die Festlegung des den Ballen umschlingenden Teils des bandförmigen Bindematerials 40 beeinträchtigt wird. Gleichzeitig mit der Öffnung der vorderen Klemmvorrichtung 94 schwenkt ein Niederhalter 118 in die dargestellte Bandebene. Dieser stellt sicher, dass der rechts von der hinteren Klemmvorrichtung 110 liegende Bandabschnitt unterhalb der Reibschweißeinrichtung 132 angeordnet bleibt.

Fig. 13e zeigt darauf folgend einen weiteren schlaufenförmigen Bandabschnitt (als durchgezogene Linie dargestellt) desselben Bindematerials, den eine Bindenadel 14 durch den Presskanal 4 in den prinzipiell dargestellten Bereich des Bindetisches führt. Der Gegenhalter 86 weicht, ermöglicht durch die Öffnung der vorderen Klemmvorrichtung 94, dem Bindematerial zeitweilig aus und befindet sich dabei aus der dargestellten Bandebene verlagert. Während die Nadelschwinge 12 im Bereich des oberen Totpunktes liegt, schließt sich die Reibschweißeinrichtung 132 und mit ihr die Schweißklemmeinrichtung 128. Daraufhin liegt das bandförmige Bindematerial 40 zweilagig zwischen der Reibschweißeinrichtung 132 bzw. der Schweißklemmeinrichtung 128 und dem Schwenkelement 88. Sobald Kontakt zwischen beiden geklemmten Lagen und der Reibschweißeinrichtung 132 hergestellt ist, beginnt aufgrund der bereits erfolgten Aktivierung des Druckluftmotors 134, der die Reibschweißeinrichtung 132 antreibt, der Schweißvorgang.

Fig. 13f zeigt, dass der Schweißvorgang bis zu diesem nächsten Schritt andauert. Die Bindenadel 14 hat den Bereich des Bindetisches verlassen, dabei hat der Gegenhalter 86 die zuvor von der Bindenadel 14 geführte Schlaufe des Bindematerials 40 nach seiner Rückverlagerung in die Bandebene gefangen. Daraufhin wird die vordere Klemmvorrichtung 94 und damit, jedoch der Klemmenbewegung nacheilend, die Schneidvorrichtung 100 geschlossen. Somit wird die Schlaufe des bandförmigen Bindematerials 40 zwischen Reibschweißeinrichtung 132 und vorderer Klemmvorrichtung 94 getrennt. Der Teil des bandförmigen Bindematerials 40, dessen Enden unter der Schweißklemmeinrichtung 128 liegen, umhüllt den fertig gepressten Ballen. Der mit einer durchgezogenen Linie dargestellte Bandabschnitt wird während des andauernden Schweißvorgangs durch die geschlossene Schweißklemmeinrichtung 128 fixiert.

Fig. 13g zeigt die Komponenten der Bindeeinrichtung, nachdem die Reibschweißeinrichtung 132 gestoppt wurde. Sie bleibt dabei, ebenso wie die Schweißklemmeinrichtung 128, geschlossen. Die Druckluft, die zuvor dem Druckluftmotor 134 für die Reibschweißeinrichtung 132 zugeführt wurde, wird nun der Düse 136 zugeführt, die die Schweißverbindung kühlt. Geschlossen bleiben die Reibschweißeinrichtung 132 und die Schweißklemmeinrichtung 128, weil dadurch eine Relativbewegung der noch heißen verschweißten Bandabschnitte verhindert wird. Fig. 13g zeigt außerdem, dass die hintere Klemmvorrichtung 110 geöffnet wird.

Fig. 13h zeigt die gleichen Komponenten, nachdem sich die Reibschweißeinrichtung 132 und die Schweißklemmeinrichtung 128 geöffnet haben. Die Enden des den Ballen umhüllenden bandförmigen Bindematerials 40 halten aufgrund der hergestellten und gekühlten stoffschlüssigen Verbindung aneinander. Durch die Kühlung wird die zum Erkalten der Schweißstelle benötigte Zeit reduziert. Damit ist der gepresste Ballen stoffschlüssig umschlungen. Im Folgenden (vgl. Fig. 13i) werden das Schwenkelement 88 und das Gegenschwenkelement 92 aus der dargestellten Bandebene herausgeschwenkt. Dadurch liegen sie nicht mehr zwischen dem den Ballen umhüllenden bandförmigen Bindematerial 40 und dem landwirtschaftlichen Erntegut und der umhüllte Ballen kann aus dem Presskanal 4 formstabil ausgebracht werden.

Beim Schwenken des Schwenkelementes 88 und des Gegenschwenkelementes 92 wird außerdem die Luftzufuhr, welche zuletzt zu der Düse 136 geführt wurde, beendet. Der Abschnitt des bandförmigen Bindematerials 40, der nach dem Schließen der Schneidvorrichtung 100 (vgl. Fig. 13f) durch die vordere Klemmvorrichtung 94 geklemmt wird, erstreckt sich entsprechend des gestrichelt dargestellten Bandabschnitts in Fig. 13a. Dabei wird dieser Abschnitt mit wachsender Länge des zu pressenden Ballens zu einem wachsenden Winkel von dem Gegenhalter 86 umgelenkt, bis er sich bei Erreichen einer maximalen Ballenlänge U-förmig an den Gegenhalter 86 anlegt. Wird ein erneuter Bindezyklus ausgelöst, finden die dargestellten Schritte des Bindezyklus erneut wie beschrieben statt.

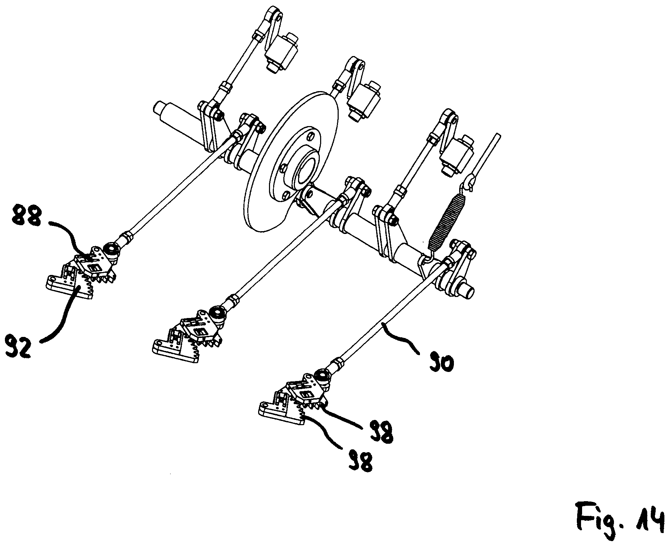

Die folgenden Fig. 14 bis 23 zeigen die in Fig. 13 symbolisch dargestellten Komponenten der Bindeeinrichtung in Übersichtsdarstellungen. Fig. 14 zeigt drei Schwenkelemente 88 und drei Gegenschwenkelemente 92. Jedes Schwenkelementpaar, bestehend aus einem Schwenkelement 88 und einem Gegenschwenkelement 92, ist dabei einer Bindeeinrichtung zugeordnet. Entsprechend der Beschreibung des Bindezyklus sind die Schwenkelementpaare zwischen bandförmigem Bindematerial 40 und den zu pressenden Ballen einbringbar und auf dem Bindetisch positioniert. Am Schwenkelement 88 ist ein Schwenkelementsteuerhebel 90 angelenkt. Das Schwenkelement 88 schwenkt um eine Schwenkachse, die in einer Schwenkachsenebene liegt, zu welcher die Längsmittelachse des Presskanals 60 orthogonal positioniert ist. Das Gegenschwenkelement 92 ist jeweils um eine parallele Schwenkachse, die in Richtung der Längsmittelachse des Presskanals von der ersten Schwenkachse beabstandet ist, schwenkbar. Übertragen wird die Schwenkbewegung vom Schwenkelement 88 auf das Gegenschwenkelement 92 durch Teilzahnkreise, die sowohl die Schwenkelemente 88 als auch die Gegenschwenkelemente 92 aufweisen. Die Teilzahnkreise 98 von Schwenkelement 88 und Gegenschwenkelement 92 befinden sich jeweils im Eingriff, so dass eine Schwenkbewegung des Schwenkelements 88 eine äquivalente Schwenkbewegung des Gegenschwenkelements 92 verursacht.

Fig. 14 zeigt außerdem eine Hebelwelle, an die der Schwenkelementsteuerhebel 90 angeordnet ist. Eine Schwenkbewegung dieser Hebelwelle wird durch eine dargestellte und auf der Steuerwelle 38 befestigte Kurvenscheibe geführt. Neben der Bewegung der Schwenkelementpaare wird durch die dargestellte Hebelwelle ein Druckluftventil 144 gesteuert, welches die Luftzufuhr zum Druckluftmotor 134 bzw. zur Düse 136 regelt. Die Hebelwelle wird durch eine Spiralfeder gegen die Kurvenscheibe zurückgestellt.

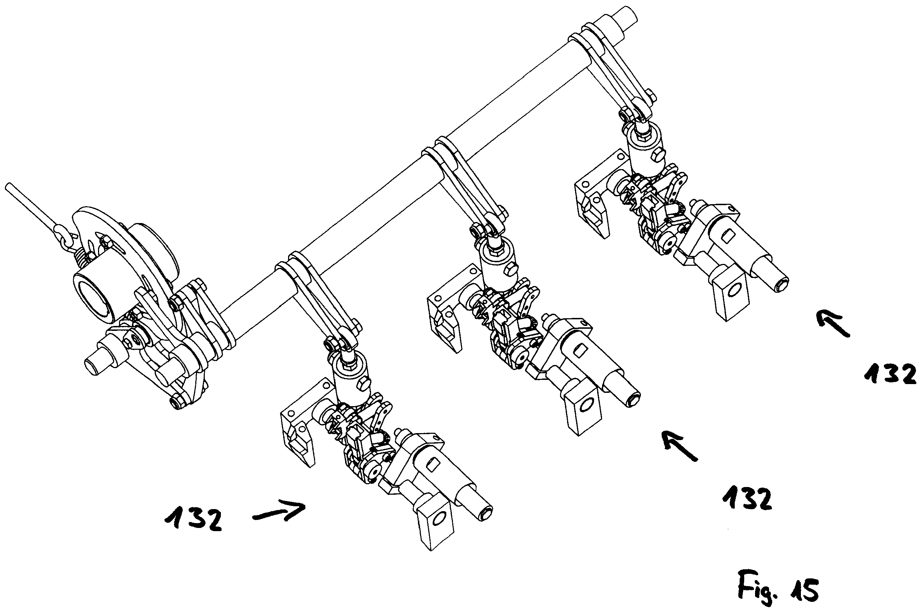

Fig. 15 zeigt drei Reibschweißeinrichtungen 132, die jeweils einer Bindeeinrichtung zugeordnet sind. Dargestellt jeweils der zugeordnete Druckluftmotor 134, ein das zu verschweißende Bindematerial während des Schweißvorgangs kontaktierendes Schweißelement 126 sowie die Schweißklemmeinrichtung 128. Diese Komponenten sind schwenkbar um eine Schweißeinrichtungsschwenkachse 130 am Bindetisch befestigt.

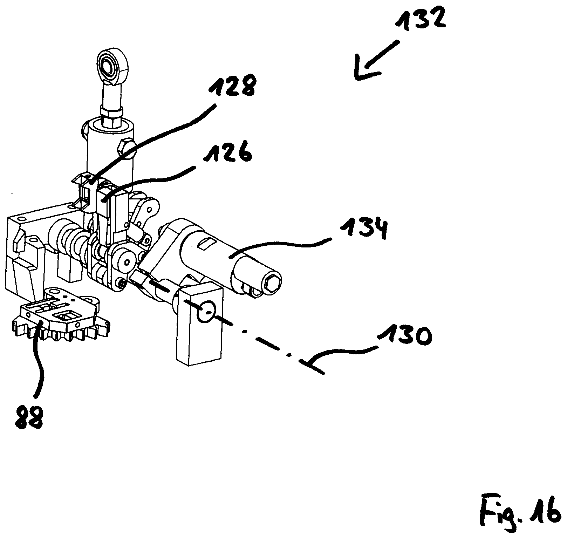

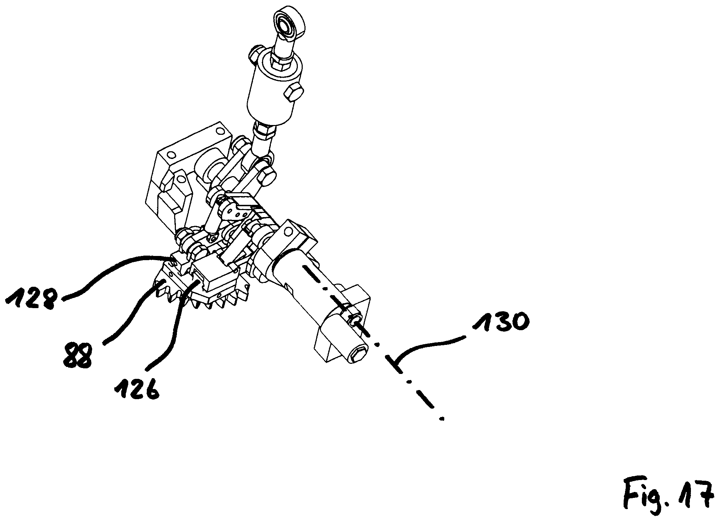

Die Fig. 16 und 17 zeigen jeweils die Reibschweißeinrichtung 132 gemeinsam mit dem Schwenkelement 88, welches zwischen bandförmigem Bindematerial 40 und Ballen geschwenkt ist. In einer geöffneten Stellung der Reibschweißeinrichtung 132 (vgl. Fig. 16) haben diese beiden Komponenten keine Wirkung aufeinander, unabhängig davon, ob der Druckluftmotor 134 aktiviert ist oder nicht. Vom Betrieb des Druckluftmotors 134 hängt ausschließlich die hochfrequente Bewegung des Schweißelements 126 ab.

Fig. 17 zeigt wiederum die Reibschweißeinrichtung 132 und das Schwenkelement 88, wobei in diesem Fall die Reibschweißeinrichtung 132 geschlossen ist. Das bandförmige Bindematerial 40, was sich in einem Bindezyklus bei dieser Position der Reibschweißeinrichtung 132 zwischen eben dieser Reibschweißeinrichtung 132 und dem Schwenkelement 88 befindet, ist nicht dargestellt.

Ausgelöst wird auch diese Schwenkbewegung der Reibschweißeinrichtung 132 von einem Hebel, der an einer Hebelwelle angeordnet ist, dessen Bewegung wiederum von einer Kurvenscheibe geführt wird (vgl. Fig. 15). Das Schweißelement 126 sowie die Schweißklemmeinrichtung 128 werden hierdurch mechanisch geführt. Um eine Überbeanspruchung dieser Bauteile beim Klemmen bzw. Schweißen zu vermeiden, sind Überlastsicherungen in Form von Federpaketen vorgesehen. Eine Überlastsicherung ist zwischen Hebelwelle und Reibschweißeinrichtung 132 angeordnet. Dem Schweißelement 126 und der Schweißklemmeinrichtung 128 sind jeweils noch zusätzlich eigene Überlastsicherungen zugeordnete. Diese dienen neben der Überlastsicherung auch zur Feineinstellung des Anpressdrucks des Schweißelements 126 und der Klemmkraft der Schweißklemmeinrichtung 128, die somit unabhängig voneinander erfolgen kann.

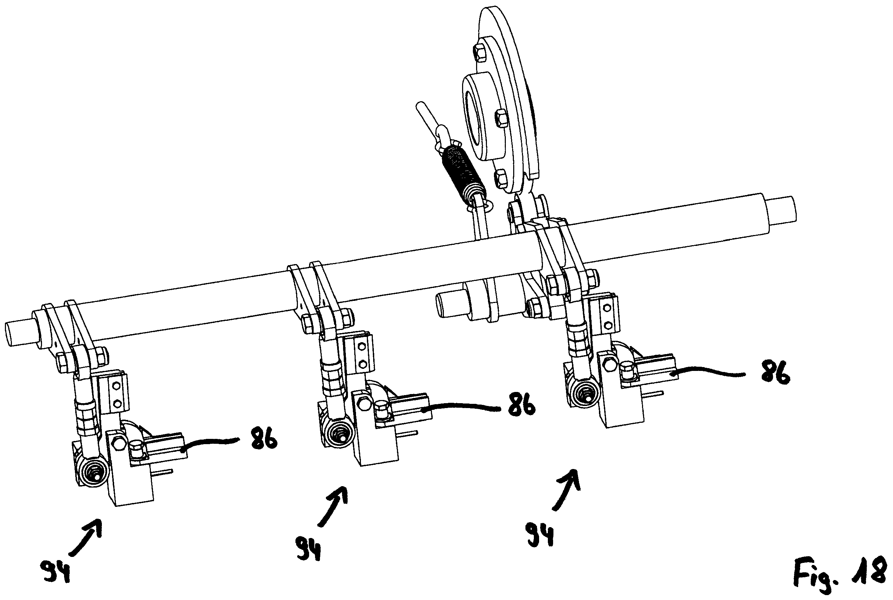

Die Fig. 18 bis 21 zeigen die vordere Klemmvorrichtung 94. Weiterhin dargestellt sind der Gegenhalter 86, der Niederhalter 118, ein Klemmarm 104 und ein Schneidarm 112. Gemäß der Beschreibung eines Bindezyklus (vgl. Fig. 13) klemmt die vordere Klemmvorrichtung 94 das bandförmige Bindematerial 40 in der Ausgangsposition der Bindeeinrichtung.

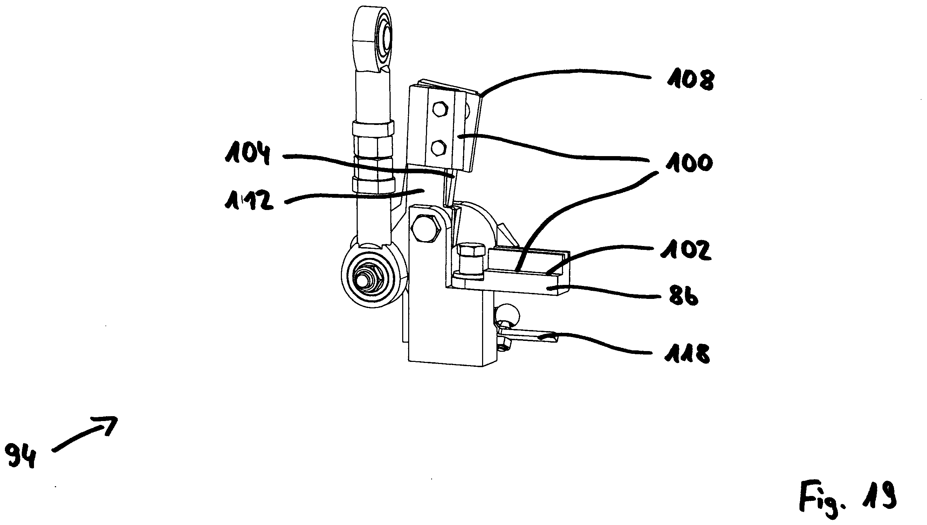

Der Gegenhalter 86 ist um eine Gegenhalterschwenkachse 96 schwenkbar gegenüber dem Bindetisch gelagert. Fig. 19 zeigt den Gegenhalter 86, welcher im oberen Bereich eine Gegenschneide 102 und einen zu einer Fixieranordnung 106 gehörenden Vorsprung 108 aufweist, in einer Gegenhalteposition. Die vordere Klemmvorrichtung 94 mit ihrem Klemmarm 104 und die Schneidvorrichtung 100 mit ihrem Schneidarm 112 sind geöffnet. Der Niederhalter 118, der um eine Niederhalterschwenkachse 120 in einem Anschlagpunkt 122 gegenüber dem Bindetisch schwenkbar in einem Anschlagpunkt gelagert ist, ist ausgeklappt.

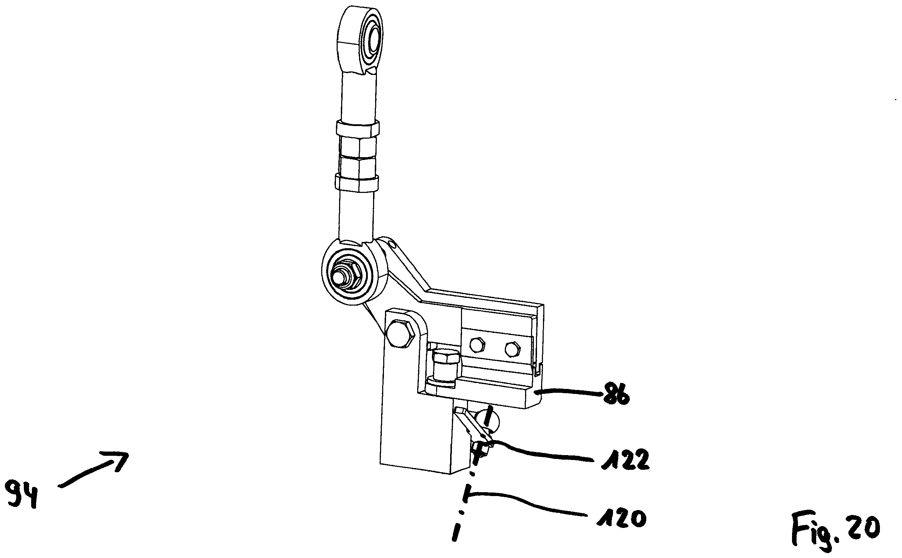

Fig. 20 zeigt den Gegenhalter 86 wiederum in der Gegenhalteposition und die vordere Klemmvorrichtung 94 in einer Klemmstellung. In dieser Klemmstellung klemmt sie das bandförmige Bindematerial 40 während sich die Bindeeinrichtung in der Ausgangsposition befindet. Dabei greift ein Vorsprung 108 des Klemmarms 104 in eine Aussparung und der beim Schließen der vorderen Klemmvorrichtung 94 nacheilende Schneidarm 112 schneidet das bandförmige Bindematerial 40 bei bestehender Klemmung durch Zusammenwirken der am Schneidarm 112 angeordneten Schneide mit einer Gegenschneide 102. Der Niederhalter 118 wird beim Schließen der vorderen Klemmvorrichtung 94 und der Schneidvorrichtung 100 eingeklappt.

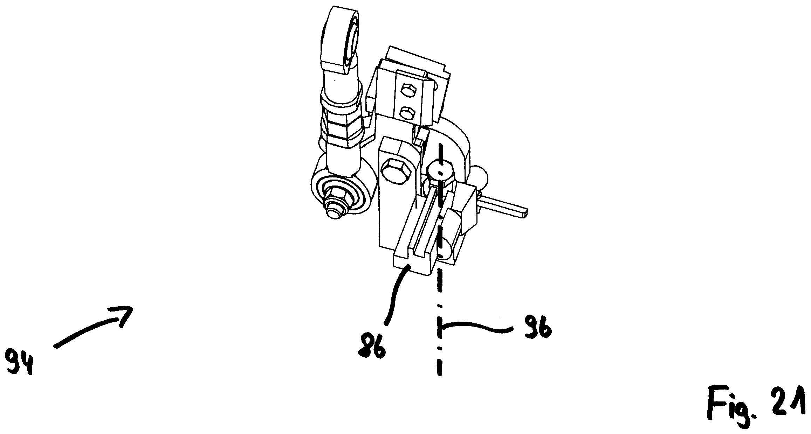

Fig. 21 zeigt den Gegenhalter 86 in einer Ausweichposition, in der er der durch die Bindenadel 14 zugeführten Schlaufe des bandförmigen Bindematerials 40 ausweicht. Ein nicht dargestelltes Federelement stellt den Gegenhalter 86 bei ausbleibender Krafteinwirkung durch das bandförmige Bindematerial 40 in die Gegenhalteposition zurück.

An der vorderen Klemmvorrichtung 94 ist ein Hebel angeordnet, welcher wiederum an einer Hebelwelle angeordnet ist, dessen Schwenkbewegung durch eine Kurvenscheibe geführt wird.

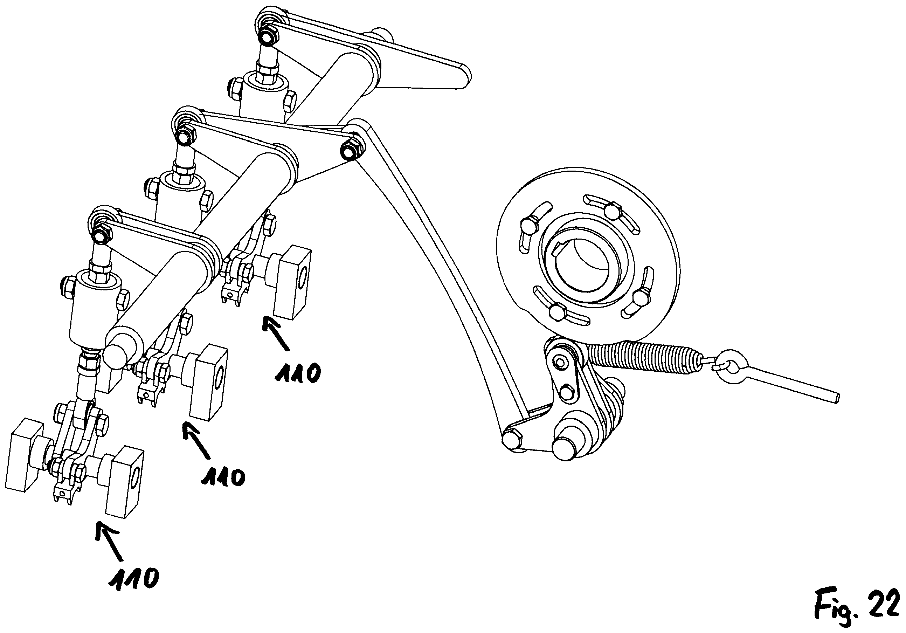

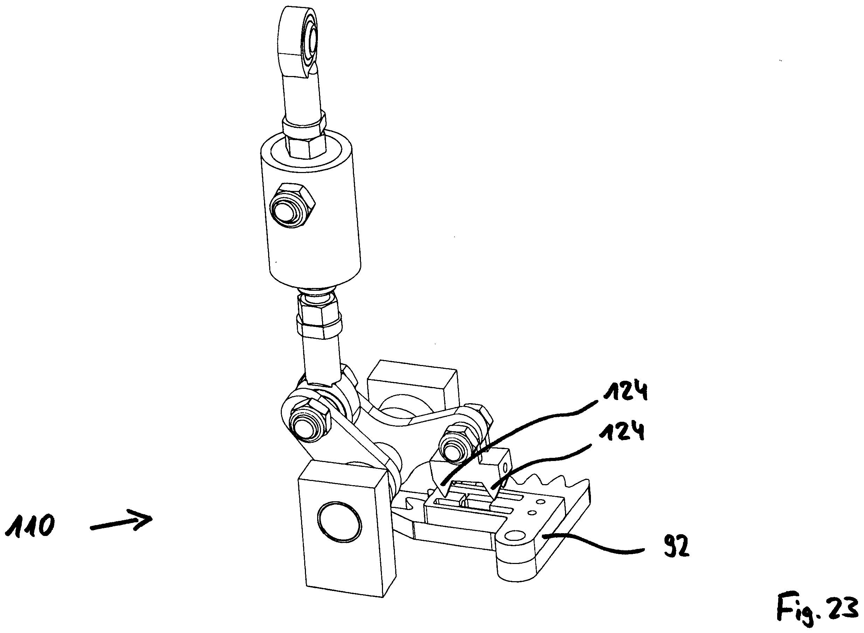

Fig. 22 und Fig. 23 zeigen die hintere Klemmvorrichtung 110. Diese befindet sich in Fahrtrichtung der Ballenpresse 2 hinter der Reibschweißeinrichtung 132 und klemmt das bandförmige Bindematerial 40 in einer Klemmposition auf dem Gegenschwenkelement 92 fest. Zur Sicherstellung einer optimalen Ausrichtung des bandförmigen Bindematerials 40 gegenüber dem Schweißelement 126 verfügt die hintere Klemmvorrichtung 110 über Fangzähne 124. Diese Fangzähne 124 umfassen in der Klemmposition das bandförmige Bindematerial 40 und zentrieren es. Dazu verfügt das in Fig. 23 dargestellte Gegenschwenkelement 92 über den Fangzähnen 124 gegenüberliegende Ausnehmungen.

Auch die hintere Klemmvorrichtung 110 wird über einen Hebel, eine Hebelwelle und eine Kurvenscheibe, die auf der Steuerwelle 38 angeordnet ist, gesteuert. Hier ist wiederum eine Überlastsicherung in Form eines Federpaketes zwischen Hebelwelle und hinterer Klemmvorrichtung 110 vorgesehen. Die Überlastsicherung ist auch zur Feineinstellung der Klemmkraft der hinteren Klemmvorrichtung 110 nutzbar.

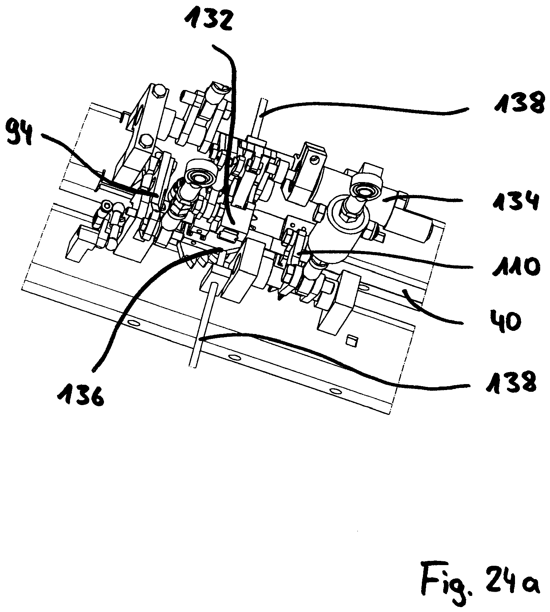

Fig. 24a zeigt die vordere Klemmvorrichtung 94, die hintere Klemmvorrichtung 110 sowie die Reibschweißeinrichtung 132 auf dem Bindetisch. Zusätzlich sind zwei Zuführelemente 138 dargestellt, die Teil der Luftkühlungseinrichtung sind. An ihrem dem bandförmigen Bindematerial 40 zugewandten Ende befindet sich jeweils eine Düse 136. Durch Zuführelement 138 und Düse 136 gelangt ein Luftstrom an die unter dem Schweißelement 126 liegenden Abschnitte des bandförmigen Bindematerials 40, wodurch das Erkalten der Schweißstelle beschleunigt wird.

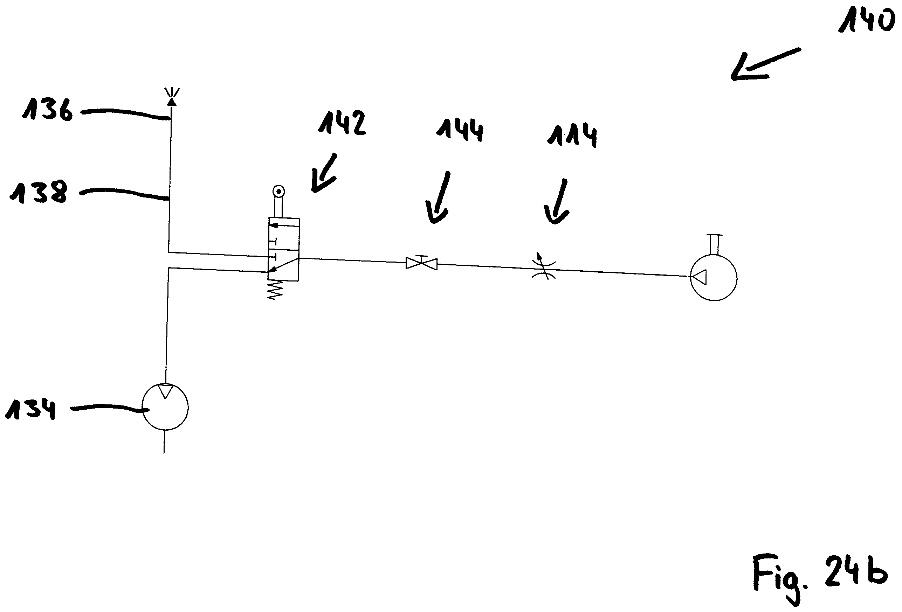

Fig. 24b zeigt einen Schaltplan der Kühleinrichtung. Die dadurch symbolisch dargestellte Regelvorrichtung 140 umfasst ein Druckluftventil 144 und ein Umschaltventil 142. Das Umschaltventil 142 kann einen Druckluftstrom zum Druckluftmotor 134 und nach Beenden des Schweißens über das Zuführelement 138 der Düse 136 zuführen.

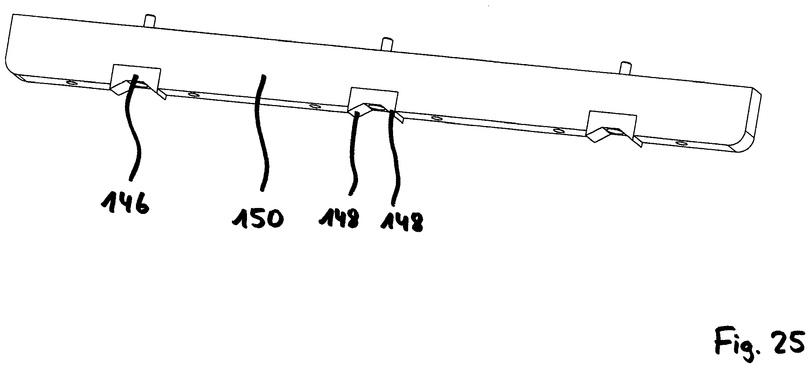

Fig. 25 zeigt drei Bandführungselemente 146, die jeweils einer Bindeeinrichtung zugeordnet sind. Die Bandführungselemente 146 sind einstellbar an einem Führungsträgerelement 150 angeordnet. Die Bandführungselemente 146 verfügen jeweils über zwei Führungsabsätze 148, die bei Anliegen des bandförmigen Bindematerials 40 für eine Zentrierung dieses sorgen. Durch die Bandführungselemente 146 wird die Ausrichtung der unteren der beiden zu verschweißenden Lagen des bandförmigen Bindematerials 40 sichergestellt. Fig. 8 zeigt, dass das Führungsträgerelement 150 dazu hinter der hinteren Klemmvorrichtung 110 auf dem Bindetisch angeordnet ist.

### Bezugsziffernliste:

- 2: Ballenpresse
- 4: Presskanal
- 8: Schwingenschwenkachse
- 10: Antriebsanordnung
- 12: Nadelschwinge
- 14: Bindenadel
- 16: Antriebsdrehachse
- 18: Antriebselement
- 20: Antriebshebel
- 22: Koppeleinrichtung
- 24: Koppelschwenkachse
- 26: erster Koppelhebel
- 28: weitere Koppelhebel
- 30: Antriebshebeldrehachse
- 32: Antriebskoppelschwenkachse
- 34: Presskolben
- 36: Führungsrolle
- 38: Steuerwelle
- 40: Bandförmiges Bindematerial
- 42: Stoffschlusserzeuger
- 44: Bremskontaktfläche
- 46: Abrolleinrichtung
- 48: Regeleinrichtung
- 50: Regelelement
- 52: Bremselement
- 54: Bremsrückstellelement
- 56: Bandrolle
- 58: Bandrollenträger
- 60: Längsmittelachse des Presskanals
- 62: Abrolldrehachse
- 64: Regelelementschwenkachse
- 66: Führungselement
- 68: Bremselementfläche
- 70: Übertragungsvorrichtung
- 72: Steuerhebel
- 74: Umlenkelement
- 76: Bandspeicher
- 78: Bandspeicherachskörper
- 80: Freiachskörper
- 82: Bandspeicherrückstellelement
- 86: Gegenhalter
- 88: Schwenkelement
- 90: Schwenkelementsteuerhebel
- 92: Gegenschwenkelement
- 94: Vordere Klemmvorrichtung
- 96: Gegenhalterschwenkachse
- 98: Teilzahnkreis
- 100: Schneidvorrichtung
- 102: Gegenschneide
- 104: Klemmarm
- 106: Fixieranordnung
- 108: Vorsprung
- 110: Hintere Klemmvorrichtung
- 112: Schneidarm
- 114: Drossel
- 118: Niederhalter
- 120: Niederhalterschwenkachse
- 122: Anschlagspunkt
- 124: Fangzähne
- 126: Schweißelement
- 128: Schweißklemmeinrichtung
- 130: Schweißeinrichtungsschwenkachse
- 132: Reibschweißeinrichtung
- 134: Druckluftmotor
- 136: Düse
- 138: Zuführelement
- 140: Regelvorrichtung
- 142: Umschaltventil
- 144: Druckluftventil
- 146: Bandführungselement
- 148: Führungsabsatz
- 150: Führungsträgerelement

## Patentansprüche

1. Ballenpresse (2) für landwirtschaftliches Erntegut mit einem Presskanal (4) und mit mindestens einer Bindeeinrichtung für ein bandförmiges Bindematerial (40), vorzugsweise aus einem verschweißbaren oder verklebbaren Kunststoffmaterial, zur Umhüllung des zu pressenden Ballens, wobei die Bindeeinrichtung einen das Bindematerial (40) stoffschlüssig verbindenden Stoffschlusserzeuger (42) aufweist, **dadurch gekennzeichnet, dass** der Bindeeinrichtung mindestens eine eine stoffschlüssige Verbindung des Bindematerials (40) kühlende Kühlungseinrichtung zugeordnet ist, dass die Kühlungseinrichtung als eine einen Luftstrom auf die stoffschlüssige Verbindung des Bindematerials (40) richtende Luftkühlungseinrichtung ausgestaltet ist, dass die Luftkühlungseinrichtung mindestens zwei auf die stoffschlüssige Verbindung des Bindematerials (40) gerichtete Düsen (136) und jeweils ein daran angeordnetes Zuführelement (139) umfasst und dass eine erste Düse (136) auf eine Schmalseite des Querschnitts des stoffschlüssig verbundenen bandförmigen Bindematerials (40) gerichtet angeordnet ist und eine weitere Düse (136) auf die gegenüberliegende Schmalseite des Querschnitts des stoffschlüssig verbundenen bandförmigen Bindematerials (40) gerichtet angeordnet ist.

2. Ballenpresse (2) nach Anspruch 1, **dadurch gekennzeichnet, dass** der Stoffschlusserzeuger (42) eine mindestens zwei Bereiche des Bindematerials (40) verschweißende Schweißeinrichtung aufweist, wobei die zwei Bereiche des Bindematerials (40) beim Verschweißen jeweils mit der Längsseite des Bindematerialquerschnittes zumindest teilweise aneinander anliegend angeordnet sind.

3. Ballenpresse (2) nach Anspruch 2, **dadurch gekennzeichnet, dass** die Schweißeinrichtung ein Schweißelement (126) umfasst und die Schweißeinrichtung aus einer Schweißstellung, in der das Schweißelement (126) an mindestens einem der mindestens zwei zu verschweißenden Bereichen des Bindematerials (40) anliegend angeordnet ist, bewegbar gegenüber dem Presskanal (4) angeordnet ist.

4. Ballenpresse (2) nach Anspruch 2 oder 3, **dadurch gekennzeichnet, dass** die mindestens zwei zu verschweißenden Bereiche des Bindematerials (40) zwischen einer von der Schweißeinrichtung umfassten und in der Schweißstellung an mindestens einem der mindestens zwei zu verschweißenden Bereichen des Bindematerials (40) anliegenden Schweißklemmeinrichtung (128) und einem an mindestens einem der mindestens zwei zu verschweißenden Bereichen des Bindematerials (40) anliegenden Schwenkelement (88) geklemmt angeordnet sind.

5. Ballenpresse (2) nach Anspruch 3 oder 4, **dadurch gekennzeichnet, dass** die Schweißeinrichtung um eine im Wesentlichen gegenüber dem Presskanal (4) ortsfeste und zur Längsmittelachse (60) des Presskanals (4) im Wesentlichen parallele Schweißeinrichtungsschwenkachse (130) schwenkbar und aus der Schweißstellung bewegbar angeordnet ist.

6. Ballenpresse (2) nach einem der Ansprüche 2 bis 5, **dadurch gekennzeichnet, dass** die Schweißeinrichtung als eine zwei Bereiche des Bindematerials (40) durch Reibschweißen verschweißende Reibschweißeinrichtung (132) ausgestaltet ist.

7. Ballenpresse (2) nach Anspruch 6, **dadurch gekennzeichnet, dass** die Reibschweißeinrichtung (132) einen das Schweißelement (126) antreibenden Druckluftmotor (134) umfasst.

8. Ballenpresse (2) nach Anspruch 7, **dadurch gekennzeichnet, dass** die Luftkühlungseinrichtung eine die Druckluftzufuhr zum Druckluftmotor (134) und zur Luftkühlungseinrichtung regelnde Regelvorrichtung (140) umfasst.

9. Ballenpresse (2) nach Anspruch 8, **dadurch gekennzeichnet, dass** die Regelvorrichtung (140) ein die Luftzufuhr zwischen dem Druckluftmotor (134) und der Luftkühlungseinrichtung umschaltendes Umschaltventil (144) und einen eine Maschinenposition messenden und die Umschaltung des Umschaltventils (144) auslösenden Sensor umfasst.

10. Ballenpresse (2) nach einem der vorhergehenden Ansprüche, zumindest aber nach Anspruch 4, **dadurch gekennzeichnet, dass** die Bindeeinrichtung das im Bereich des Stoffschlusserzeugers (42) zwischen Bindematerial (40) und Presskanal (4) einbringbare und um eine Schwenkachse schwenkbar gelagerte Schwenkelement (88) aufweist.

11. Ballenpresse (2) nach Anspruch 10, **dadurch gekennzeichnet, dass** die Bindeeinrichtung mindestens ein zum Schwenkelement (88) benachbart angeordnetes und schwenkbar um eine zur Schwenkachse parallele Gegenschwenkachse gelagertes Gegenschwenkelement (92) aufweist.

12. Ballenpresse (2) nach Anspruch 11, **dadurch gekennzeichnet, dass** das Schwenkelement (88) und das Gegenschwenkelement (92) jeweils zumindest einen eine Verzahnung aufweisenden Teilzahnkreis (98) aufweisen, wobei die Verzahnungen eines Schwenkelementes (88) und eines Gegenschwenkelementes (92) miteinander im Eingriff stehen.

13. Ballenpresse (2) nach einem der Ansprüche 10 bis 12, **dadurch gekennzeichnet, dass** der Schwenkwinkel des Schwenkelements (88) weniger als 90° beträgt.

## Claims

1. Baler (2) for agricultural crops, comprising a pressing channel (4) and comprising at least one binding apparatus for a strip-shaped binding material (40), preferably made of a weldable or bondable plastics material, for wrapping the bale to be pressed, the binding apparatus having an integral bond generator (42) which integrally bonds the binding material (40), **characterised in that** the binding apparatus is associated with at least one cooling apparatus which cools an integral bond of the binding material (40), **in that** the cooling apparatus is designed as an air cooling apparatus which directs an airflow onto the integral bond of the binding material (40), **in that** the air cooling apparatus comprises at least two nozzles (136) directed onto the integral bond of the binding material (40) and a supply element (139) arranged on each of said nozzles, and **in that** a first nozzle (136) is arranged so as to be directed onto a narrow side of the cross section of the integrally bonded strip-shaped binding material (40) and a further nozzle (136) is arranged so as to be directed onto the opposite narrow side of the cross section of the integrally bonded strip-shaped binding material (40).

2. Baler (2) according to claim 1, **characterised in that** the integral bond generator (42) has a welding apparatus which welds at least two regions of the binding material (40), each longitudinal side of the binding material cross section of the two regions of the binding material (40) being arranged during welding so as to be at least partially adjacent to one another.

3. Baler (2) according to claim 2, **characterised in that** the welding apparatus comprises a welding element (126) and the welding apparatus is arranged so as to be movable relative to the pressing channel (4) out of a welding position in which the welding element (126) is arranged adjacent to at least one of the at least two regions of the binding material (40) to be welded.

4. Baler (2) according to either claim 2 or claim 3, **characterised in that** the at least two regions of the binding material (40) to be welded are arranged so as to be clamped between a welding clamping apparatus (128) which is comprised by the welding apparatus and, in the welding position, is adjacent to at least one of the at least two regions of the binding material (40) to be welded, and a pivot element (88) which is adjacent to at least one of the at least two regions of the binding material (40) to be welded.

5. Baler (2) according to either claim 3 or claim 4, **characterised in that** the welding apparatus is arranged so as to be pivotable about a welding apparatus pivot axis (130) which is substantially stationary relative to the pressing channel (4) and substantially parallel to the longitudinal central axis (60) of the pressing channel (4) and so as to be movable out of the welding position.

6. Baler (2) according to any of claims 2 to 5, **characterised in that** the welding apparatus is designed as a friction welding apparatus (132) which welds two regions of the binding material (40) by means of friction welding.

7. Baler (2) according to claim 6, **characterised in that** the friction welding apparatus (132) comprises a compressed air motor (134) which drives the welding element (126).

8. Baler (2) according to claim 7, **characterised in that** the air cooling apparatus comprises a control device (140) which controls the compressed air supply to the compressed air motor (134) and to the air cooling apparatus.

9. Baler (2) according to claim 8, **characterised in that** the control device (140) comprises a switching valve (144) which switches the air supply between the compressed air motor (134) and the air cooling apparatus, and a sensor which measures a machine position and triggers the switching of the switching valve (144).

10. Baler (2) according to any of the preceding claims, but at least according to claim 4, **characterised in that** the binding apparatus has the pivot element (88) which can be inserted in the region of the integral bond generator (42) between the binding material (40) and pressing channel (4) and is pivotably mounted about a pivot axis.

11. Baler (2) according to claim 10, **characterised in that** the binding apparatus has at least one counter-pivot element (92) which is arranged adjacent to the pivot element (88) and pivotably mounted about a counter-pivot axis which is parallel to the pivot axis.

12. Baler (2) according to claim 11, **characterised in that** the pivot element (88) and the counter-pivot element (92) each have at least one partial toothed circle (98) having a toothing, the toothings of a pivot element (88) and of a counter-pivot element (92) being engaged with one another.

13. Baler (2) according to any of claims 10 to 12, **characterised in that** the pivot angle of the pivot element (88) is less than 90°.

## Revendications

1. Presse à balles (2) pour un produit de récolte agricole avec un canal de presse (4) et avec au moins un dispositif de liant pour un matériau de liant (40) en forme de bande, de préférence en un matériau plastique soudable ou collable, pour envelopper la balle à presser, dans laquelle le dispositif de liant présente un générateur de liaison de matière (42) reliant par matière le matériau de liant (40),
**caractérisée en ce qu'**au moins un dispositif de refroidissement refroidissant une liaison de matière du matériau de liant (40) est associé au dispositif de liant, que le dispositif de refroidissement est configuré comme un dispositif de refroidissement d'air dirigeant un courant d'air sur la liaison de matière du matériau de liant (40), que le dispositif de refroidissement d'air comporte au moins deux buses (136) dirigées sur la liaison de matière du matériau de liant (40) et respectivement un élément d'amenée (139) agencé dessus et qu'une première buse (136) est agencée dirigée sur un côté étroit de la section transversale du matériau de liant (40) en forme de bande relié par matière et une autre buse (136) est agencée dirigée sur le côté étroit opposé de la section transversale du matériau de liant (40) en forme de bande raccordé par matière.

2. Presse à balles (2) selon la revendication 1, **caractérisée en ce que** le générateur de liaison de matière (42) présente un dispositif de soudage soudant au moins deux zones du matériau de liant (40), dans laquelle les deux zones du matériau de liant (40) sont agencées reposant au moins partiellement l'une contre l'autre lors du soudage respectivement avec le côté longitudinal de la section transversale de matériau de liant.

3. Presse à balles (2) selon la revendication 2, **caractérisée en ce que** le dispositif de soudage comporte un élément de soudage (126) et le dispositif de soudage est agencé de manière mobile par rapport au canal de presse (4) depuis une position de soudage dans laquelle l'élément de soudage (126) est agencé reposant contre au moins une des au moins deux zones à souder du matériau de liant (40).

4. Presse à balles (2) selon la revendication 2 ou 3, **caractérisée en ce que** les au moins deux zones à souder du matériau de liant (40) sont agencées serrées entre un dispositif de serrage et soudage (128) compris par le dispositif de soudage et reposant dans la position de soudage contre au moins une des au moins deux zones à souder du matériau de liant (40) et un élément de pivotement (88) reposant contre au moins une des au moins deux zones à souder du matériau de liant (40).

5. Presse à balles (2) selon la revendication 3 ou 4, **caractérisée en ce que** le dispositif de soudage est agencé de manière pivotante autour d'un axe de pivotement de dispositif de soudage (130) fixe sensiblement par rapport au canal de presse (4) et parallèle sensiblement à l'axe médian longitudinal (60) du canal de presse (4) et de manière mobile depuis la position de soudage.

6. Presse à balles (2) selon l'une des revendications 2 à 5, **caractérisée en ce que** le dispositif de soudage est configuré comme un dispositif de soudage par friction (132) soudant deux zones du matériau de liant (40) par soudage par friction.

7. Presse à balles (2) selon la revendication 6, **caractérisée en ce que** le dispositif de soudage par friction (132) comporte un moteur à air comprimé (134) entraînant l'élément de soudage (126).

8. Presse à balles (2) selon la revendication 7, **caractérisée en ce que** le dispositif de refroidissement d'air comporte un dispositif de régulation (140) régulant l'amenée d'air comprimé au moteur à air comprimé (134) et au dispositif de refroidissement d'air.

9. Presse à balles (2) selon la revendication 8, **caractérisée en ce que** le dispositif de régulation (140) comporte une valve de commutation (144) commutant l'amenée d'air entre le moteur à air comprimé (134) et le dispositif de refroidissement d'air et un capteur mesurant une position de machine et déclenchant la commutation de la valve de commutation (144).

10. Presse à balles (2) selon l'une des revendications précédentes, mais au moins selon la revendication 4, **caractérisée en ce que** le dispositif de liant présente l'élément de pivotement (88) pouvant être introduit dans la zone du générateur de liaison de matière (42) entre le matériau de liant (40) et le canal de presse (4) et logé de manière pivotante autour d'un axe de pivotement.

11. Presse à balles (2) selon la revendication 10, **caractérisée en ce que** le dispositif de liant présente au moins un élément de pivotement antagoniste (92) agencé de manière contigüe à l'élément de pivotement (88) et logé de manière pivotante autour d'un axe de pivotement antagoniste parallèle à l'axe de pivotement.

12. Presse à balles (2) selon la revendication 11, **caractérisée en ce que** l'élément de pivotement (88) et l'élément de pivotement antagoniste (92) présentent respectivement au moins un cercle denté partiel (98) présentant une denture, dans laquelle les dentures d'un élément de pivotement (88) et d'un élément de pivotement antagoniste (92) sont en prise l'une avec l'autre.

13. Presse à balles (2) selon l'une des revendications 10 à 12, **caractérisée en ce que** l'angle de pivotement de l'élément de pivotement (88) s'élève à moins de 90°.
